# EUROPEAN PATENT APPLICATION

(11) **EP 4 697 244 A1**
(43) Date of publication of application: **18.02.2026**
(21) Application number: 23933006.1
(22) Date of filing: 12.04.2023
(51) Int. Cl.: G06N 10/70

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: FUJISAKI, Jun, Kawasaki-shi, Kanagawa 211-8588 (JP)
(74) Representative: Haseltine Lake Kempner LLP
(86) International application number: PCT/JP2023/014939
(87) International publication number: WO 2024/214230

(57) **Abstract**

Each parallel processing device (22i) distributes to all other parallel processing devices (220), even/odd information representing a result of determining whether the number of syndromes representing errors in a decoded region (70i) assigned thereto is even or odd. Each parallel processing device (22i) determines, based on the even/odd information of each decoded region (700), a data qubit (611) to be judged as a Z error in an overlap region (800) of the decoded region (70i) assigned thereto. Each parallel processing device (22i) updates the syndrome of an ancillary qubit (621) in the decoded region (70i) assigned thereto. Each parallel processing device (22i) determines, based on the syndrome of the updated ancillary qubit (621), a data qubit (611) to be judged as a Z error, in a unique region (100i) of the decoded region (70i) assigned thereto.

## Description

### TECHNICAL FIELD

The present invention relates to an information processing program, an information processing method, and an information processing device.

### BACKGROUND ART

Conventionally, there is a logical qubit in which multiple data qubits and multiple ancillary qubits are arranged in a two-dimensional lattice shape such that the ancillary qubits present at the intersections of the lattice and such that the ancillary qubits and the data qubits are arranged alternating each other along the line segments of the lattice. With respect to a logical qubit, there is a technique for detecting a data qubit in which an error has occurred based on a syndrome of each of the ancillary qubits. The error is when noise is superimposed on information. The syndrome is information of an ancillary qubit to which information of an adjacent data qubit is transferred through a two-qubit operation. For example, a data qubit in which an error has occurred is detected by searching for a pattern of a data qubit in which an error has occurred among multiple data qubits that reproduce the pattern of the syndrome of each ancillary qubit.

As a prior art, for example, there is a technique in which the quantum state of a cooling qubit is fed back to a data qubit. Also, for example, there is a technique in which a neural network decoder performs a fusion decoding process with respect to feature information obtained from error syndrome information and generates error result information. Also, for example, there is a technique in which a quantum Clifford circuit is separated into multiple logical Clifford circuits. Also, for example, there is a technique in which the transition frequency of either the data qubit or the ancillary qubit is adjusted to a coupling frequency.
Patent Document 1: Japanese Laid-Open Patent Publication No. 2014-241484
Patent Document 2: Japanese Laid-Open Patent Publication No. 2022-532466
Patent Document 3: U.S. Patent Application Publication No. 2021/0224150
Patent Document 4: U.S. Patent Application Publication No. 2021/0279134

### DISCLOSURE OF INVENTION

### PROBLEM TO BE SOLVED BY THE INVENTION

In the conventional techniques, however, it is difficult to detect a data qubit in which an error has occurred. For example, the greater the number of data qubits is, the greater is the processing time and processing load required to detect a data qubit in which an error has occurred. For example, when a pattern of data qubits in which an error has occurred is searched for as a minimum weight perfect matching problem, the processing time becomes O(N^3), where N is the number of qubits.

In one aspect, the present invention aims to facilitate detection of data qubits in which an error has occurred.

### MEANS FOR SOLVING PROBLEM

According to one embodiment, an information processing program, an information processing method, and information processing device are proposed that cause a computer to execute a process, the process including: identifying a plurality of divided regions obtained by dividing an entire region of a logical qubit in which a plurality of data qubits and a plurality of ancillary qubits are arranged in a two-dimensional lattice pattern such that the ancillary qubits are present at intersections of the lattice and such that the ancillary qubits and the data qubits alternate each other along each line segment of the lattice, the divided regions sharing one region between adjacent line segments in a first direction of the lattice, the entire region being divided within a range from a first region between first adjacent line segments in the first direction of the lattice to a second region between second adjacent line segments in the first direction of the lattice; determining, based on a syndrome of each of the plurality of ancillary qubits in the logical qubit, whether a number of the syndromes is even or odd, each of the syndromes representing an error in each of the identified divided regions; from among shared regions that, of the plurality of divided regions, are shared by divided regions of the plurality of divided regions, determining a data qubit to be judged as an error such that in a divided region for which a result of the determining is odd, the number of data qubits to be judged as an error is an odd number and such that in a divided region for the result of the determining is even, the number of data qubits to be judged as an error is an even number; updating the syndrome of the each of the ancillary qubits based on a position of the determined data qubit to be judged as an error in the logical qubit; and determining, based on the updated syndrome of the each of the ancillary qubits, the data qubit to be judged as an error, from among regions that, of the plurality of divided regions, are other than the shared regions.

### EFFECT OF THE INVENTION

According to one aspect, it is possible to easily detect data qubits in which an error has occurred.

### BRIEF DESCRIPTION OF DRAWINGS

Fig. 1 is an explanatory diagram depicting one example of an information processing method according to an embodiment.
Fig. 2 is an explanatory diagram depicting an example of a quantum operation control system 200.
Fig. 3 is a block diagram of an example of a hardware configuration of an information processing device 100.
Fig. 4 is a block diagram depicting an example of a hardware configuration of a quantum computing device 210.
Fig. 5 is a block diagram depicting a functional configuration example of the information processing device 100.
Fig. 6 is an explanatory diagram depicting an example of a logical qubit 600.
Fig. 7 is an explanatory diagram depicting an example of determining a data qubit 611 to be judged as a Z error.
Fig. 8 is an explanatory diagram depicting an example of determining the data qubit 611 to be judged as a Z error.
Fig. 9 is an explanatory diagram depicting an example of determining the data qubit 611 to be judged as a Z error.
Fig. 10 is an explanatory diagram depicting an example of determining the data qubit 611 to be judged as a Z error.
Fig. 11 is an explanatory diagram depicting an example of determining the data qubit 611 to be judged as a Z error.
Fig. 12 is an explanatory diagram depicting a specific example in which the data qubit 611 to be judged as a Z error in an overlap region 800 is determined.
Fig. 13 is an explanatory diagram depicting a specific example in which the data qubit 611 to be judged as a Z error in the overlap region 800 is determined.
Fig. 14 is an explanatory diagram depicting an example of performing logic inversion.
Fig. 15 is an explanatory diagram depicting a specific example of operation of the information processing device 100.
Fig. 16 is an explanatory diagram depicting a specific example of operation of the information processing device 100.
Fig. 17 is an explanatory diagram depicting a specific example of operation of the information processing device 100.
Fig. 18 is an explanatory diagram depicting a specific example of operation of the information processing device 100.
Fig. 19 is an explanatory diagram depicting a specific example of operation of the information processing device 100.
Fig. 20 is an explanatory diagram depicting a specific example of operation of the information processing device 100.
Fig. 21 is an explanatory diagram depicting one example of effects of the information processing device 100.
Fig. 22 is an explanatory diagram depicting one example of effects of the information processing device 100.
Fig. 23 is an explanatory diagram depicting one example of effects of the information processing device 100.
Fig. 24 is a flowchart depicting an example of a first preparatory processing procedure.
Fig. 25 is a flowchart depicting an example of a second preparatory processing procedure.
Fig. 26 is a flowchart depicting an example of a third preparatory processing procedure.
Fig. 27 is a flowchart depicting an example of an overall processing procedure.
Fig. 28 is a flowchart depicting an example of a decoding procedure.
Fig. 29 is a flowchart depicting an example of the decoding procedure.

### BEST MODE(S) FOR CARRYING OUT THE INVENTION

An information processing program, an information processing method, and an information processing device according to the present invention are described in detail with reference to the accompanying drawings.

### (Example of Information Processing Method According to Embodiment)

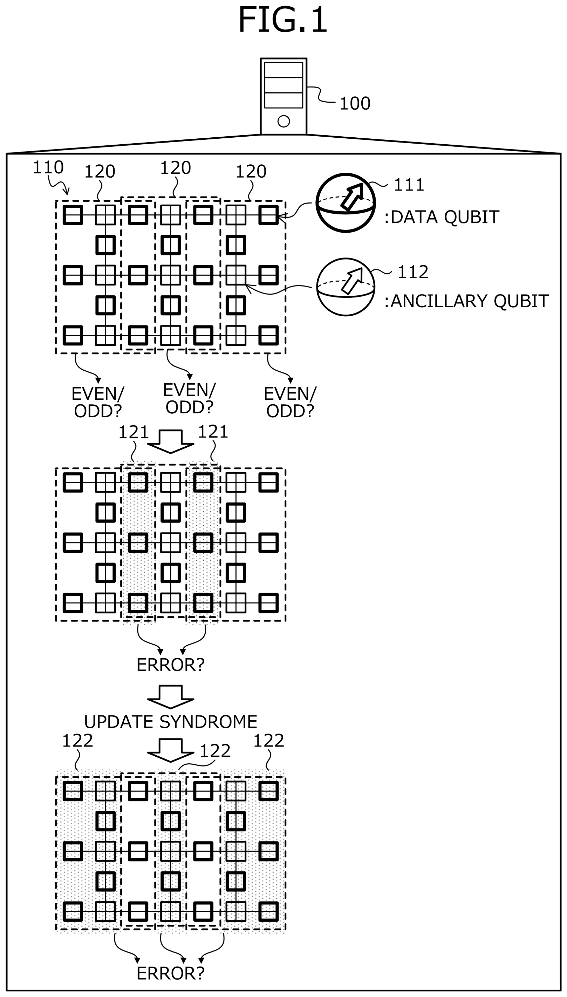

Fig. 1 is an explanatory diagram depicting one example of an information processing method according to an embodiment. An information processing device 100 is a computer for facilitating detection of an error-causing data qubit. The information processing device 100 is, for example, a server or a personal computer (PC).

In the field of quantum computers, there is a tendency for an error to occur in a data qubit representing data due to environmental noise, interference with other data qubits, and noise during operation of the data qubit.

For this reason, it is desirable to make it possible to detect and correct errors that occur in a data qubit.

For example, there is a logical qubit in which a data qubit is made redundant. The redundancy is implemented, for example, by a technique called a surface code. For example, there is a logical qubit in which multiple data qubits and multiple ancillary qubits are arranged in a two-dimensional lattice such that the ancillary qubits are arranged at the intersections of the lattice and the data qubits are arranged between the intersections of the lattice. The multiple data qubits forming the logical qubit express one piece of data as a whole.

In a logical qubit, there is a technique for detecting a data qubit in which an error has occurred based on the syndrome of each of the ancillary qubits. An error is when noise is superimposed on information. A syndrome is information of an ancillary qubit that has transferred information of an adjacent data qubit through a two-qubit operation.

For example, it is conceivable to detect a data qubit in which an error has occurred by searching for a pattern of a data qubit in which an error has occurred among multiple data qubits that reproduce the pattern of the syndrome of each ancillary qubit. For example, detecting a data qubit in which an error has occurred is sometimes called "decoding."

For example, there is a technique (technique 1) for detecting a data qubit in which an error has occurred by searching for a pattern of a data qubit in which an error has occurred, as a minimum weight perfect matching problem. For example, a method (technique 2) is considered in which the pattern of the data qubit in which an error has occurred is searched for by Union-Find decoding to detect the data qubit in which an error has occurred.

However, conventionally, it is difficult to detect the data qubit in which an error has occurred. For example, there is a problem that the processing time and processing load required to detect the data qubit in which an error has occurred increases as the number of data qubits increases.

For example, in the above method (technique 1), the processing time becomes O(N^3). N is the number of qubits. For example, in the above method (technique 2), although the processing time becomes O(N), as the number of data qubits increases, it is impossible to avoid increases in the processing time and processing load required to detect the data qubit in which an error has occurred.

In addition, in a computer such as a field programmable gate array (FPGA), there may be a limit to the logical qubit size that may be handled based on the memory size and the number of processors. The computer may be, for example, an application specific integrated circuit (ASIC). In addition, since the processing time and processing load required for detecting an error-causing data qubit increases, there is a problem that it becomes difficult to handle a huge number of logical qubits.

On the other hand, for example, a method (technique 3) is considered in which plural logical qubits are assigned to different classical computers, and one logical qubit is handled by one classical computer. For example, one classical computer is considered to search for a pattern of a data qubit in which an error has occurred in one logical qubit assigned to itself as a minimum weight perfect matching problem.

This method (technique 3) has a problem that it is difficult to apply when performing an operation that handles two or more logical qubits simultaneously. In this method (technique 3), when performing an operation that handles two or more logical qubits simultaneously, two or more logical qubits must be assigned together to one classical computer. This poses a problem in that it becomes difficult to reduce the processing load and processing time imposed on a classical computer.

Also, for example, a method (technique 4) may be considered in which multiple divided regions obtained by dividing an entire region of logical qubits are assigned to different classical computers, and one divided region is handled by one classical computer. For example, one classical computer may search for a pattern of data qubits in which an error has occurred in the divided region assigned to itself, as a minimum weight perfect matching problem.

This method (technique 4) has a problem that it is difficult to apply when the number of syndromes representing errors in one divided region is an odd number. In this method (technique 4), there is a problem that the classical computer cannot search for a pattern of data qubits in which an error has occurred when the number of syndromes representing errors in the divided region assigned to itself is an odd number.

Thus, in this embodiment, an information processing method that facilitates detection of data qubits in which an error has occurred in a logical qubit is described.

In Fig. 1, the information processing device 100 manages a logical qubit 110 in which multiple data qubits 111 and multiple ancillary qubits 112 are arranged in a two-dimensional lattice. The logical qubit 110 has a qubit set in which, for example, the ancillary qubits 112 present at the intersections of the lattice, and the ancillary qubits 112 and the data qubits 111 are arranged alternately on each line segment of the lattice.

For example, each ancillary qubit 112 is for Z error identification. Here, for the sake of simplicity, a description of an ancillary qubit (not depicted) for X error correction among the logical qubits 110 is omitted. The logical qubit 110 may include a qubit set in which, for example, multiple ancillary qubits for X error correction are further arranged.

(1-1) The information processing device 100 obtains the syndrome of each of the ancillary qubits 112 of the multiple ancillary qubits 112 in the logical qubit 110.

(1-2) The information processing device 100 identifies multiple divided regions 120 obtained by dividing the entire region of the logical qubit 110. The divided region 120 is, for example, a range from a region 121 between a certain adjacent line segments in a first direction of the lattice to the region 121 between other adjacent line segments. The first direction is, for example, the vertical direction. The region 121 is a range in which no ancillary qubits 112 exist. The divided regions 120 share, for example, one of the regions 121 between adjacent line segments in the first direction of the lattice.

(1-3) The information processing device 100 determines whether the number of syndromes representing errors in each of the identified divided regions 120 is an even number or an odd number, based on the syndromes of each of the obtained ancillary qubits 112.

This enables the information processing device 100 to identify, among the multiple divided regions 120, divided regions 120 for which the determined result is an odd number and divided regions 120 for which the determined result is an even number. The information processing device 100 may obtain a guideline for determining a data qubit 111 to be judged as an error from among the regions 121. For example, the error is a Z error.

In the following description, a divided region 120 for which the determined result is an odd number may be referred to as an "odd number region." Also, in the following description, the divided region 120 for which the determined result is an even number may be referred to as an "even number region."

(1-4) The information processing device 100 determines a data qubit 111 to be judged as an error from among the regions 121 shared between the multiple divided regions 120. The information processing device 100 determines the data qubits 111 to be judged as an error, for example, so that the number of the data qubits 111 to be judged as an error in the odd region is an odd number, and the number of the data qubits 111 to be judged as an error in the even region is an even number. For example, the information processing device 100 searches for a pattern of data qubits in which an error has occurred in each region 121 shared between the divided regions 120, so as to reproduce the pattern of the syndromes of each ancillary qubit.

As a result, even when the number of syndromes representing errors in any of the divided regions 120 is odd, the information processing device 100 may determine the data qubits 111 to be judged as an error from among the regions 121 shared between the divided regions 120. The information processing device 100 may appropriately determine the data qubits 111 to be judged as an error from among the regions 121 shared between the divided regions 120. The information processing device 100 may obtain a guideline for updating the syndrome of each ancillary qubit 112.

(1-5) The information processing device 100 updates the syndromes of the obtained ancillary qubits 112 based on the position of the determined data qubit 111 that is judged to have the error, among the logical qubits 110. The information processing device 100, for example, inverts the syndrome of the ancillary qubit 112 that is adjacent to the data qubit 111 that is judged to have the determined error, among the logical qubits 110.

This allows the information processing device 100 to appropriately update the syndromes of the ancillary qubits 112. The information processing device 100 may obtain a guideline for determining the data qubit 111 to be judged to have an error, from among regions 122 that are not shared between divided regions 120, among the divided regions 120.

(1-6) The information processing device 100 determines, in each of the regions 122 not shared between the divided regions 120, a data qubit 111 to be judged as an error, based on the syndrome of each of the updated ancillary qubits 112. The information processing device 100 searches for a pattern of data qubits in which an error has occurred in each of the regions 122 not shared between the divided regions 120, so as to reproduce the pattern of the syndrome of each of the ancillary qubits, for example.

This allows the information processing device 100 to appropriately determine the data qubit 111 to be judged as an error, in each of the regions 122 not shared between the divided regions 120. The information processing device 100 may appropriately determine the data qubit 111 to be judged as an error, from among the logical qubits 110.

The information processing device 100 may reduce the processing load and processing time required when determining the data qubit 111 to be judged as an error, from among the logical qubits 110. The information processing device 100 may, for example, make the size of the range in which the pattern of the data qubit in which an error has occurred smaller than the overall size of the logical qubit 110. Therefore, the information processing device 100 may, for example, reduce the size of the problem, and may reduce the processing load and processing time required when determining the data qubit 111 to be judged as an error.

The information processing device 100 may, for example, make it possible to perform calculations on each divided region 120 in parallel by multiple computing units. The computing unit is, for example, a computer different from the information processing device 100. The computing unit may be, for example, a processor possessed by the information processing device 100. Hence, the information processing device 100 may, for example, reduce the processing time required when determining the data qubit 111 to be judged as an error from among the logical qubits 110. The information processing device 100 may control multiple computing units so that each computing unit of the multiple computing units obtains the syndrome of each ancillary qubit 112, rather than directly obtaining the syndrome.

Here, while a case has been described where the information processing device 100 determines the data qubit 111 to be judged as a Z error based on the ancillary qubit 112 for identifying a Z error among the logical qubits 110, the present disclosure is not limited hereto. For example, the information processing device 100 may determine the data qubit 111 to be judged as an X error based on an ancillary qubit (not depicted) for identifying an X error among the logical qubits 110.

### (An Example of Quantum Operation Control System 200)

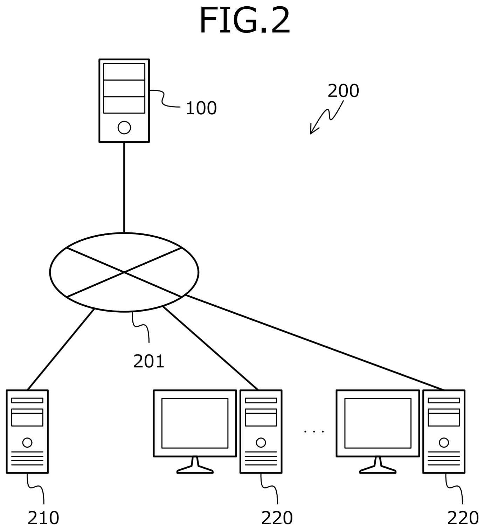

Next, with reference to Fig. 2, an example of a quantum operation control system 200 will be described to which the information processing device 100 depicted in Fig. 1 is applied.

Fig. 2 is an explanatory diagram depicting an example of the quantum operation control system 200. In Fig. 2, the quantum operation control system 200 includes a quantum computing device 210, an information processing device 100, and multiple parallel processing devices 220.

In the quantum operation control system 200, the information processing device 100 and the quantum computing device 210 are coupled via a wired or wireless network 201. The network 201 is, for example, a local region network (LAN), a wide region network (WAN), the Internet, etc. In the quantum operation control system 200, the information processing device 100 and the parallel processing device 220 are coupled via the wired or wireless network 201. In the quantum operation control system 200, the quantum computing device 210 and the parallel processing device 220 are coupled via the wired or wireless network 201.

The information processing device 100 is a computer for making an error occurring in a data qubit in a logical qubit detectable and correctable. The logical qubit is present in, for example, the quantum computing device 210. The error is, for example, noise superimposed on information.

The information processing device 100 receives a parameter representing the logical qubit from the quantum computing device 210. The parameters representing the logical qubit indicate, for example, the arrangement of multiple data qubits and multiple ancillary qubits in the logical qubit. The parameters representing the logical qubit indicate, for example, the index of the data qubit and the index of the ancillary qubit in the logical qubit.

The information processing device 100 identifies N divided regions to be assigned to the N parallel processing devices 220 by dividing the entire region of the logical qubit into N divided regions based on the received parameters representing the logical qubit. N is, for example, equal to or less than the number of parallel processing devices 220 in the quantum operation control system 200.

The divided region ranges, for example, from a region in which data qubits are arranged between certain adjacent line segments in the vertical direction of the lattice to a region in which data qubits are arranged between other line segments. The divided regions share, for example, one of the regions in which data qubits are arranged between adjacent line segments in the vertical direction of the lattice. In the following description, a region shared between the divided regions may be referred to as a "shared region." In the following description, a region that is not shared among the divided regions may be referred to as a "unique region."

The information processing device 100 assigns N divided regions to different parallel processing devices 220. For each divided region, the information processing device 100 transmits a parameter representing the divided region and a parameter representing a shared region of the divided region, to the parallel processing device 220 to which the divided region is assigned. The parameter representing the divided region indicates, for example, an arrangement of one or more data qubits and one or more ancillary qubits in the divided region. The parameter representing the divided region indicates, for example, an index of the data qubits and an index of the ancillary qubits in the divided region. The information processing device 100 is, for example, a server or a personal computer (PC).

The quantum computing device 210 is a computer having one or more logical qubits. The quantum computing device 210 is, for example, a quantum computer having a qubit chip that implements each of the one or more logical qubits. The quantum computing device 210 may be, for example, a classical computer having a simulator that implements one or more logical qubits.

The quantum computing device 210 transmits parameters representing the logical qubits to the information processing device 100. The parameters representing the logical qubits indicate, for example, an arrangement of multiple data qubits and multiple ancillary qubits in the logical qubit. The parameters representing the logical qubits indicate, for example, the index of the data qubit and the index of the ancillary qubit in the logical qubit.

The quantum computing device 210 measures the syndrome of each of the multiple ancillary qubits among the logical qubits. The quantum computing device 210 transmits the syndrome of each measured ancillary qubit to each parallel processing device 220 of N parallel processing devices 220. The quantum computing device 210 receives the result of determining the data qubit to be judged as an error from the parallel processing device 220. The quantum computing device 210 corrects the error that has occurred in the data qubit in the logical qubit based on the result of determining the data qubit to be judged as an error.

The parallel processing device 220 is a computer for determining the data qubit to be judged as an error among the logical qubits. The parallel processing device 220 receives a parameter representing the divided region assigned to the device from the information processing device 100. The parallel processing device 220 cooperates with other parallel processing devices 220 and determines a data qubit to be judged as an error in the divided region based on a parameter representing the divided region assigned to the parallel processing device.

The parallel processing device 220 determines a data qubit to be judged as an error in the shared region of the divided region assigned to the parallel processing device, for example, based on the syndrome of the ancillary qubit. The parallel processing device 220 updates the syndrome of the ancillary qubit, for example, based on the position of the determined data qubit to be judged as an error. The parallel processing device 220 determines a data qubit to be judged as an error in the unique region of the divided region assigned to the parallel processing device, for example, based on the syndrome of the updated ancillary qubit.

The parallel processing device 220 transmits the result of determining the data qubit to be judged as an error to the quantum computing device 210. The parallel processing device 220 transmits, for example, an index of the data qubit to be judged as an error to the quantum computing device 210. The parallel processing device 220 is, for example, a server or a PC.

Here, while a case where the information processing device 100 is a device different from the quantum computing device 210 has been described, the present disclosure is not limited hereto. For example, the information processing device 100 may have a function as the quantum computing device 210 and act as the quantum computing device 210.

Here, while a case where the information processing device 100 is a device different from the parallel processing device 220 has been described, the present disclosure is not limited hereto. For example, the information processing device 100 may have a function as the parallel processing device 220 and act as the parallel processing device 220.

In the following description, the i-th parallel processing device 220 may be expressed as "parallel processing device 22i" for distinction.

### (Hardware Configuration Example of Information Processing Device 100)

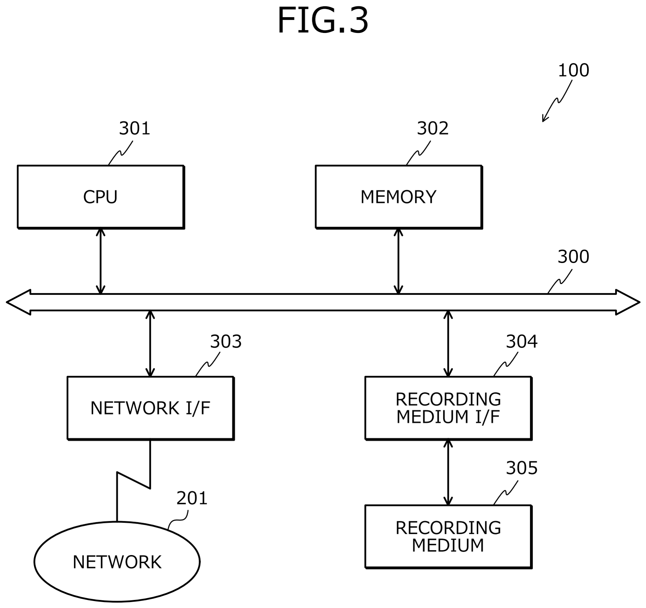

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are coupled to each other by a bus 300.

Here, the CPU 301 governs overall control of the information processing device 100. The memory 302, for example, includes a read-only memory (ROM), a random-access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is coupled to the network 201 via a communications line and is coupled to other computers through the network 201. Further, the network I/F 303 administers an internal interface with the network 201 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disc drive, a solid-state drive (SSD), a universal serial bus (USB) port, or the like. The recording medium 305 is a nonvolatile memory storing data written thereto under the control of the recording medium I/F 304. The recording medium 305 is, for example, a disc, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

### (Hardware Configuration Example of Quantum Computing Device 210)

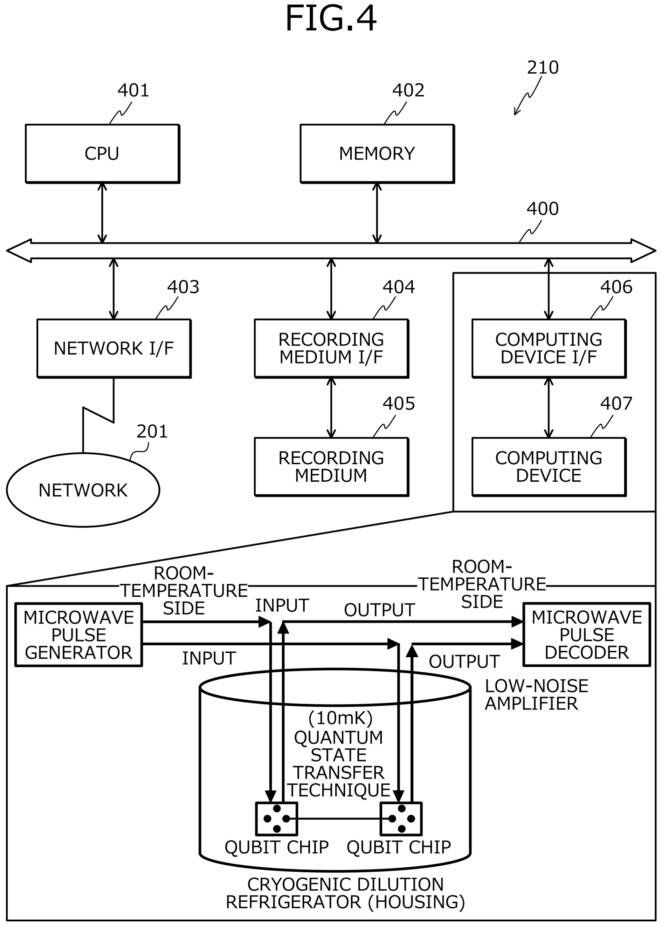

Next, an example of a hardware configuration of the quantum computing device 210 is described with reference to Fig. 4.

Fig. 4 is a block diagram depicting an example of a hardware configuration of the quantum computing device 210. In Fig. 4, the quantum computing device 210 has a CPU 401, a memory 402, a network I/F 403, a recording medium I/F 404, and a recording medium 405. The quantum computing device 210 further has a computing device I/F 406 and a computing device 407. Further, the components are coupled by a bus 400.

Here, the CPU 401 governs overall control of the quantum computing device 210. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 201 through a communications line and is coupled to other computers via the network 201. The network I/F 403 administers an internal interface with the network 201 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 210.

The computing device I/F 406 controls access to the computing device 407 under the control of the CPU 401. The computing device I/F 406 converts signals output from the CPU 401 into input signals for the computing device 407 using a microwave pulse generator and transmits the converted signals to the computing device 407. The computing device I/F 406 converts the signals output from the computing device 407 into input signals for the CPU 401 using a microwave pulse demodulator and transmits the converted signals to the CPU 401. The computing device 407 is a computing device equipped with one or more quantum bit chips cooled to an extremely low temperature of 10 mK. Each quantum bit chip represents, for example, a logical quantum bit. The computing device 407 performs a predetermined computation according to an input signal using one or more quantum bit chips, and outputs an output signal corresponding to the result of performing the predetermined computation.

In addition to the components above, the quantum computing device 210 may have, for example, a keyboard, a mouse, a display, a printer, a scanner, a microphone, a speaker, etc. The quantum computing device 210 may also have the recording medium I/F 404 and recording medium 405 in plural. Further, in the quantum computing device 210, the recording medium I/F 404 and the recording medium 405 may be omitted.

### (Hardware Configuration Example of Parallel Processing Device 220)

The hardware configuration example of the parallel processing device 220 is for example similar to the hardware configuration example of the information processing device 100 depicted in Fig. 3 and thus, description thereof will be omitted.

### (Functional Configuration Example of Information Processing Device 100)

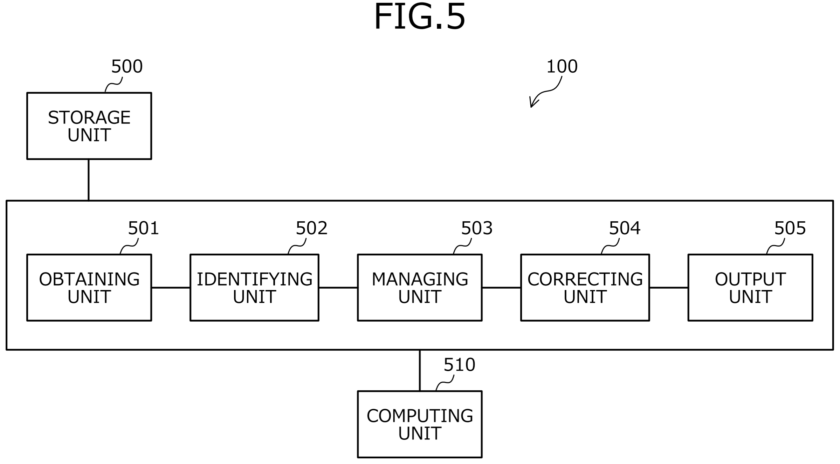

Next, a functional configuration example of the information processing device 100 will be described with reference to Fig. 5.

Fig. 5 is a block diagram depicting a functional configuration example of the information processing device 100. The information processing device 100 includes a storage unit 500, an obtaining unit 501, an identifying unit 502, a managing unit 503, a correcting unit 504, and an output unit 505. Multiple computing units 510 are present outside the information processing device 100.

The storage unit 500 is implemented, for example, by a storage region such as the memory 302 or the recording medium 305 depicted in Fig. 3. In the following, while a case where the storage unit 500 is included in the information processing device 100 will be described, the present disclosure is not limited hereto. For example, the storage unit 500 may be included in a device different from the information processing device 100, and the stored contents of the storage unit 500 may be referred to from the information processing device 100.

The obtaining unit 501 to the output unit 505 function as an example of a control unit. For example, functions of the obtaining unit 501 to the output unit 505 are implemented by, for example, the CPU 301 executing a program stored in a storage region such as the memory 302 or the recording medium 305 depicted in Fig. 3, or by the network I/F 303. The processing results of each functional unit are stored to a storage region such as the memory 302 or the recording medium 305 depicted in Fig. 3.

The storage unit 500 stores various pieces of information that are referred to or updated in the processing by the functional units. The storage unit 500 stores, for example, an arrangement of multiple data qubits and multiple ancillary qubits in a logical qubit. For example, the multiple data qubits express one data as a whole. For example, one of the ancillary qubits is for Z error identification. For example, one of the ancillary qubits is for X error correction.

The logical qubit has, for example, a first qubit set in which multiple data qubits and multiple ancillary qubits for Z error identification are arranged in a two-dimensional lattice shape. The logical qubit, for example, has a first qubit set in which the ancillary qubit for Z error identification is present at the intersection of the first lattice, and the ancillary qubit for Z error identification and the data qubit are alternately present along each line segment of the first lattice. The logical qubit for example has a first qubit set in which the ancillary qubit for Z error identification and the data qubit are alternately present along a horizontal line segment of the first lattice, starting from the data qubit.

The logical qubit, for example, has a second qubit set in which multiple data qubits and multiple ancillary qubits for X error correction are arranged in a two-dimensional lattice. The second qubit set shares multiple data qubits with the first qubit set. The logical qubit, for example, has a second qubit set in which the ancillary qubit for X error correction is present at the intersection of the second lattice, and the ancillary qubit for X error correction and the data qubit are alternately present along each line segment of the second lattice. The first lattice assumed in the first qubit set and the second lattice assumed in the second qubit set are mutually shifted lattices. The logical qubit, for example, has a second qubit set in which an ancillary qubit for X-error correction and a data qubit are alternately present along a vertical line segment of the second lattice, starting with a data qubit.

The storage unit 500 for example stores an arrangement of multiple data qubits, multiple ancillary qubits for Z-error identification, and multiple ancillary qubits for X-error identification in the logical qubit. The arrangement is obtained by, for example, the obtaining unit 501.

The storage unit 500 stores, for example, an index of each data qubit in the logical qubit. The storage unit 500 stores, for example, an index of each ancillary qubit for Z error identification in the logical qubit. The storage unit 500 stores, for example, an index of each ancillary qubit for X error identification in the logical qubit. The index is obtained, for example, by the obtaining unit 501.

The obtaining unit 501 obtains various pieces of information used in the processing of each functional unit. The obtaining unit 501 stores the obtained various pieces of information to the storage unit 500 or outputs the obtained information to the functional units. The obtaining unit 501 may also output various pieces of information stored in the storage unit 500 to the functional units. The obtaining unit 501 obtains various pieces of information based on, for example, a user's operation input. The obtaining unit 501 may receive various pieces of information from, for example, a device different from the information processing device 100.

The obtaining unit 501 obtains, for example, an arrangement of multiple data qubits, multiple ancillary qubits for identifying Z errors, and multiple ancillary qubits for identifying X errors in a logical qubit. For example, the obtaining unit 501 obtains the arrangement by receiving the arrangement from another computer. The other computer is, for example, the quantum computing device 210. For example, the obtaining unit 501 may obtain the arrangement by receiving an input of the arrangement based on an operational input from a user.

The obtaining unit 501 obtains, for example, indexes of each data qubit, each ancillary qubit for identifying Z errors, and each ancillary qubit for identifying X errors in a logical qubit. For example, the obtaining unit 501 obtains the indexes by receiving the indexes from another computer. The other computer is, for example, the quantum computing device 210. For example, the obtaining unit 501 may obtain the indexes by receiving an input of the index based on an operational input from a user.

The obtaining unit 501 obtains, for example, a processing request. The processing request may include, for example, an arrangement of multiple data qubits, multiple ancillary qubits for Z error identification, and multiple ancillary qubits for X error identification in the logical qubit. The processing request may include, for example, an index of each data qubit, each ancillary qubit for Z error identification, and each ancillary qubit for X error identification in the logical qubit. The obtaining unit 501 for example obtains the processing request by receiving the processing request from another computer. The other computer is, for example, the quantum computing device 210. The obtaining unit 501, for example, may obtain the processing request by receiving an input of the processing request based on an operation input by a user.

The obtaining unit 501 may receive a start trigger for starting the processing of any of the functional units. The start trigger may be, for example, a predetermined operation input by a user. The start trigger may be, for example, predetermined information received from another computer. The start trigger may be, for example, predetermined information output by any of the functional units. For example, the obtaining unit 501 regards reception of the processing request as a start trigger for starting the processing of the identifying unit 502 and the managing unit 503.

The identifying unit 502 refers to the contents stored in the storage unit 500 and identifies multiple divided regions obtained by dividing the entire region of the logical qubit. The identifying unit 502 identifies, for example, multiple first divided regions for Z error identification obtained by dividing the entire region of the logical qubit. For example, the identifying unit 502 identifies multiple first divided regions obtained by dividing the entire region in a range from a region between adjacent vertical lines of the first lattice to a region between other adjacent vertical lines of the first lattice such that one region between adjacent vertical lines of the first lattice is shared between the first divided regions. This allows the identifying unit 502 to identify the first divided region to be assigned to the computing unit 510.

For example, the identifying unit 502 may identify multiple first divided regions for each partial region including multiple horizontal lines of the first lattice out of the entire region. For example, the identifying unit 502 identifies multiple first divided regions obtained by dividing the partial region in a range from a region between adjacent vertical lines of the first lattice to a region between other adjacent vertical lines of the first lattice, so that the divided regions mutually share one region between adjacent vertical lines of the first lattice. This allows the identifying unit 502 to identify the first divided region to be assigned to the computing unit 510.

The identifying unit 502 identifies multiple second divided regions for identifying X errors, for example, by dividing the entire region of the logical qubit. For example, the identifying unit 502 identifies multiple second divided regions obtained by dividing the entire region in a range from a region between adjacent horizontal lines of the second lattice to a region between other adjacent horizontal lines of the second lattice, so that the second divided regions mutually share one region between adjacent horizontal lines of the second lattice. This allows the identifying unit 502 to identify the second divided region to be assigned to the computing unit 510.

The identifying unit 502 may, for example, identify multiple second divided regions for each partial region including multiple vertical line segments of the second lattice from the entire region. For example, the identifying unit 502 identifies multiple second divided regions by dividing the partial region in a range from a region between adjacent horizontal lines of the second lattice to a region between other adjacent horizontal lines of the second lattice so that the divided regions mutually share one region between adjacent horizontal lines of the second lattice. This allows the identifying unit 502 to identify the second divided regions to be assigned to the computing unit 510.

The managing unit 503 assigns the multiple divided regions identified by the identifying unit 502 to different computing units 510. The managing unit 503 controls the multiple computing units 510 to determine data qubits to be judged as errors in the divided regions assigned to the computing units 510.

The managing unit 503, for example, assigns the first division regions identified by the identifying unit 502 to different computing units 510. For example, the managing unit 503 controls the multiple computing units 510 so as to determine data qubits to be judged as Z errors in the first division regions assigned to each of the computing units 510.

For example, the managing unit 503 transmits to the computing units 510, the arrangement of data qubits and ancillary qubits for Z error identification in the first division regions assigned to each of the computing units 510, thereby controlling the multiple computing units 510 as follows. This makes it easier for the managing unit 503 to determine data qubits to be judged as Z errors.

For example, the managing unit 503 controls the multiple computing units 510 so as to determine whether the number of syndromes representing errors in each of the first division regions is even or odd, based on the syndromes of the ancillary qubits for Z error identification. For example, the computing unit 510 determines whether the number of syndromes representing errors in the first divided region assigned to the computing unit 510 itself is an even number or an odd number. For example, the computing unit 510 distributes the result of the determination to the other computing units 510.

For example, the managing unit 503 controls the multiple computing units 510 to determine a data qubit to be judged as a Z error from each shared region shared between the first divided regions. For example, the computing unit 510 determines a data qubit to be judged as a Z error from each shared region shared between the first divided regions in the first divided region assigned to the computing unit 510 itself.

More specifically, when the result of the determination for the first divided region assigned to the computing unit 510 is an odd number, the computing unit 510 determines a data qubit to be judged as a Z error such that the number of data qubits to be judged as a Z error is an odd number. More specifically, the computing unit 510 determines the data qubits to be judged as Z errors so that the number of data qubits to be judged as Z errors is an even number when the result of the determination is an even number for the first divided region assigned to the computing unit 510 itself.

More specifically, each of the multiple computing units 510 identifies the number of first divided regions for which the result of the determination is an odd number in one or more first divided regions prior to the first divided region assigned to the computing unit 510 itself. More specifically, each of the multiple computing units 510 reverses the identified number of times of whether to judge any data qubit as a Z error in a shared region that exists at the end side of the first divided regions assigned to the computing unit 510 and is shared with other first divided regions.

More specifically, each of the multiple computing units 510 identifies candidates for data qubits to be judged as Z errors in the first divided region assigned to the computing unit 510 itself based on the result of the determination and the syndrome according to a predetermined search method. The predetermined search method is, for example, a method for solving a minimum weight perfect matching problem. More specifically, each of the multiple computing units 510 leaves the candidates present in each shared region shared between the first division regions among the identified candidates, and deletes the candidates present outside the shared region. More specifically, each of the multiple computing units 510 determines a data qubit to be judged as a Z error from each shared region in the first division region assigned to the computing unit 510 itself based on the position of the remaining candidate and the syndrome.

The managing unit 503, for example, controls the multiple computing units 510 to update the syndrome of each ancillary qubit for Z error identification based on the position of the determined data qubit to be judged as a Z error among the logical qubits. The computing unit 510, for example, updates the syndrome of each ancillary qubit for Z error identification in the first division region assigned to the computing unit 510 itself.

The managing unit 503, for example, controls the multiple computing units 510 to determine a data qubit to be judged as a Z error from among the shared regions shared between the first divided regions, based on the syndromes of the updated ancillary qubits. For example, the computing unit 510 determines a data qubit to be judged as a Z error from among the shared regions shared between the first divided regions in the first divided region assigned to the computing unit 510 itself. This allows the managing unit 503 to determine a data qubit to be judged as a Z error in each first divided region.

The managing unit 503, for example, assigns the multiple second divided regions identified by the identifying unit 502 to different computing units 510. The managing unit 503, for example, controls the multiple computing units 510 to determine a data qubit to be judged as an X error in the second divided regions assigned to each computing unit 510.

For example, the managing unit 503 controls the multiple computing units 510 as follows by transmitting to each computing unit 510, the arrangement of data qubits and ancillary qubits for identifying X errors in the second divided region assigned to that computing unit 510. This makes it easier for the managing unit 503 to determine the data qubits to be judged as X errors.

For example, the managing unit 503 controls the multiple computing units 510 to determine whether the number of syndromes representing errors in each second divided region is even or odd, based on the syndromes of each ancillary qubit for identifying X errors. For example, the computing unit 510 determines whether the number of syndromes representing errors in the second divided region assigned to the computing unit 510 itself is even or odd. For example, the computing unit 510 distributes the determination result to the other computing units 510.

For example, the managing unit 503 controls the multiple computing units 510 to determine a data qubit to be judged as an X error from each shared region shared between the second divided regions. For example, the computing unit 510 determines a data qubit to be judged as an X error from each shared region shared between the second divided regions in the second divided region assigned to the computing unit 510 itself.

More specifically, the computing unit 510 determines a data qubit to be judged as an X error such that the number of data qubits to be judged as an X error is an odd number when the result of the determination is an odd number for the second divided region assigned to the computing unit 510 itself. More specifically, the computing unit 510 determines a data qubit to be judged as an X error such that the number of data qubits to be judged as an X error is an even number when the result of the determination is an even number for the second divided region assigned to the computing unit 510 itself.

More specifically, each of the multiple computing units 510 identifies a candidate for a data qubit to be judged as an X error in the second divided region assigned to the plural computing unit 510 itself according to a predetermined search method. The predetermined search method is, for example, a method for solving a minimum weight perfect matching problem. More specifically, the multiple computing units 510 leave candidates present in each shared region shared between the second divided regions among the identified candidates, and delete candidates present outside the shared region. More specifically, the multiple computing units 510 determine a data qubit to be judged as an X error from among the shared regions shared between the second divided regions in the second divided region assigned to the computing units 510 themselves based on the position of the remaining candidate and the syndrome.

More specifically, each of the multiple computing units 510 identifies the number of second divided regions in which the result of the determination is an odd number in one or more second divided regions prior to the second divided region assigned to the computing unit 510 itself, among the multiple second divided regions. More specifically, each of the multiple computing units 510 reverses whether to determine any data qubit as an X error in the shared region that exists at the end side of the second divided region assigned to the computing unit 510 itself and that is shared with other second divided regions, the identified number of times.

More specifically, the managing unit 503 controls the multiple computing units 510 to update the syndrome of each ancillary qubit for identifying an X error, based on the position of the data qubit to be judged as an X error among the logical qubits. For example, the computing unit 510 updates the syndrome of each ancillary qubit for identifying an X error in the second divided region assigned to the computing unit 510 itself.

For example, the managing unit 503 controls the multiple computing units 510 to determine a data qubit to be judged as an X error from among the regions other than the shared regions shared between the second divided regions, based on the syndrome of each of the updated ancillary qubits. For example, the computing unit 510 determines a data qubit to be judged as an X error from among the regions other than the shared regions shared between the second divided regions, in the second divided region assigned to the computing unit 510 itself.

When the number of data qubits to be judged as a Z error on a horizontal line segment of the lattice is equal to or greater than a threshold value, the correcting unit 504 inverts the data qubits that are not determined as a Z error on the line segment and the data qubits to be judged as a Z error. This allows the correcting unit 504 to improve the accuracy of correcting Z errors.

When the number of data qubits determined to be X errors on a vertical line segment of the lattice is equal to or greater than a threshold value, the correcting unit 504 inverts the data qubits that are not determined to be X errors on the line segment and the data qubits that are determined to be X errors. This allows the correcting unit 504 to improve the accuracy of correcting X errors.

The output unit 505 outputs the processing results of at least one of the functional units. The output format is, for example, display on a display, print output to a printer, transmission to an external device via the network I/F 303, or storage in a storage region such as the memory 302 or the recording medium 305. This allows the output unit 505 to notify the user of the processing results of at least one of the functional units, thereby improving the convenience of the information processing device 100.

The output unit 505 outputs, for example, the result of determining the data qubits that are determined to be errors. For example, the output unit 505 outputs the result of determining the data qubits that are determined to be Z errors so that the user can refer to it. The output unit 505 for example transmits the result of determining the data qubit determined to be a Z error to another computer. The other computer is, for example, the quantum computing device 210. As a result, the output unit 505 can make the result of determining the data qubit determined to be a Z error available externally.

The output unit 505 for example outputs the result of determining the data qubit determined to be an X error so that the user can refer to it. The output unit 505 for example transmits the result of determining the data qubit determined to be an X error to another computer. The other computer is, for example, the quantum computing device 210. As a result, the output unit 505 can make the result of determining the data qubit determined to be an X error available externally.

Here, the case where multiple computing units 510 exist outside the information processing device 100 has been described, but this is not limited thereto. For example, the information processing device 100 may include multiple computing units 510. Here, the case where multiple computing units 510 exist has been described, but this is not limited thereto. For example, there may be only one computing unit 510.

Here, while a case where the information processing device 100 includes the obtaining unit 501, the identifying unit 502, the managing unit 503, the correcting unit 504, and the output unit 505 has been described, the present disclosure is not limited hereto. For example, the information processing device 100 may not include any of the functional units. For example, the information processing device 100 may omit the correcting unit 504. The correcting unit 504 may be included in the quantum computing device 210, for example.

### (An Example of Operation of Information Processing Device 100)

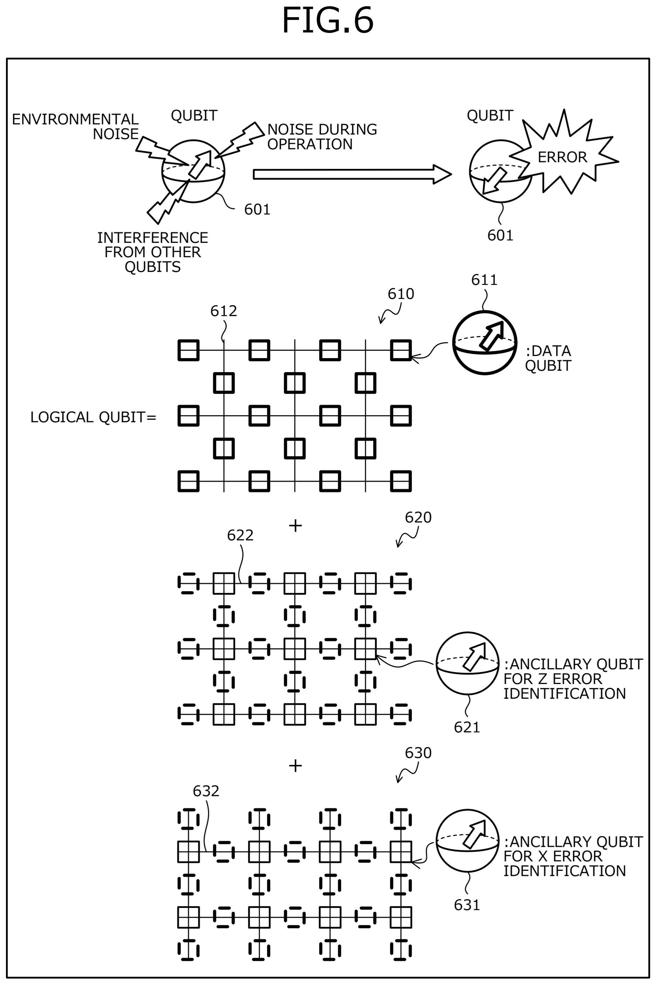

Next, an example of the operation of the information processing device 100 will be described with reference to Figs. 6 to 14. First, an example of a logical qubit 600 will be described with reference to Fig. 6.

Fig. 6 is an explanatory diagram depicting an example of the logical qubit 600. As depicted in Fig. 6, a qubit 601 tends to have a high probability of error occurrence due to environmental noise, interference from other data qubits, and noise during operation of the data qubit. An error means that noise is superimposed on the information of the qubit 601.

Hence, the logical qubit 600 makes a data qubit 611 expressing the data redundant. The logical qubit 600 has a data qubit set 610 in which multiple data qubits 611 are arranged in a two-dimensional lattice. The logical qubit 600 has the data qubit set 610 in which the multiple data qubits 611 are arranged in a two-dimensional lattice so that, for example, the data qubits 611 are present between the intersections of a lattice 612.

The logical qubit 600 has an ancillary qubit set 620 in which multiple ancillary qubits 621 for identifying a Z error are arranged in a two-dimensional lattice for the data qubit set 610. The logical qubit 600 has the ancillary qubit set 620 in which the multiple ancillary qubits 621 are arranged in a two-dimensional lattice so that the ancillary qubits 621 are present at the intersections of a lattice 622, for example. The logical qubit 600 for example has the ancillary qubit set 620, starting from the data qubit 611, such that the ancillary qubit 621 and the data qubit 611 are alternately present along a horizontal line segment of the lattice 622.

The logical qubit 600 has an ancillary qubit set 630 in which multiple ancillary qubits 631 for X error correction are arranged in a two-dimensional lattice shape for data qubit set 610. The logical qubit 600 has the ancillary qubit set 630 in which the multiple ancillary qubits 631 are arranged in a two-dimensional lattice shape, for example, such that the ancillary qubits 631 are present at intersections of a lattice 632. The logical qubit 600 for example has the ancillary qubit set 630, starting from the data qubit 611, such that the ancillary qubits 631 and the data qubits 611 are alternately present along a vertical line segment of the lattice 632.

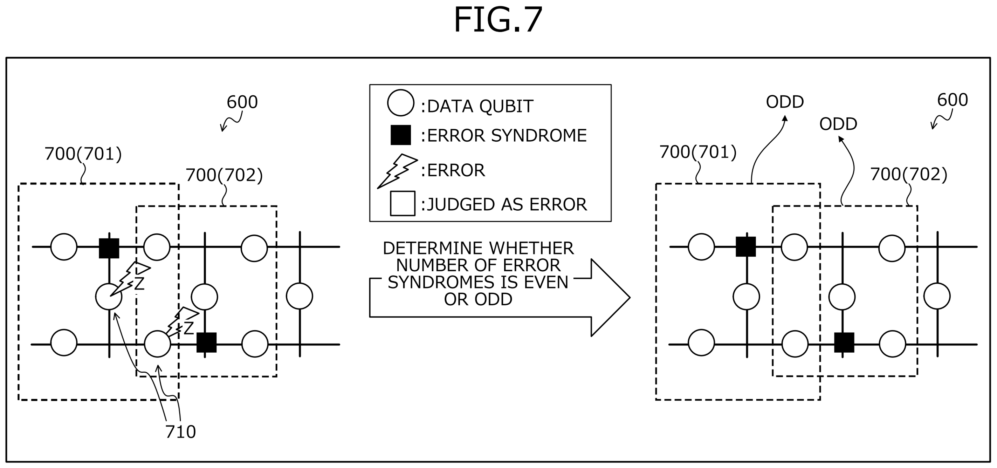

In the following, for the sake of simplicity, an example of the operation of the information processing device 100 based on the multiple ancillary qubits 621 for identifying Z errors will be described. Next, referring to Figs. 7 to 11, an example will be described in which the information processing device 100 determines a data qubit 611 to be judged as a Z error based on the ancillary qubit 621 for identifying Z errors.

Figs. 7, 8, 9, 10, and 11 are explanatory diagrams depicting an example of determining the data qubit 611 to be judged as a Z error. In Fig. 7, it is assumed that the data qubit 611 present at a position 710 among the logical qubits 600 is the data qubit 611 in which a Z error has actually occurred.

The information processing device 100 divides the entire region of the logical qubit 600, thereby identifying multiple decoded regions 700 obtained by dividing the entire region.

The information processing device 100, for example, identifies multiple decoded regions 700 by dividing the entire region into ranges of three columns of qubits so that the decoded regions 700 share a region in which the data qubits 611 are arranged between adjacent vertical lines of the lattice 622.

The range of three columns includes, for example, a column in which the ancillary qubits 621 for Z error identification are arranged and a column in which the data qubits 611 on both sides of the column are arranged. In the following description, the region shared between the decoded regions 700 may be referred to as an "overlap region."

In the following description, the i-th decoded region 700 may be referred to as a "decoded region 70i" to be identifiable. i is an integer equal to or greater than 1. i is an integer equal to or less than the number of the decoded regions 700. In the example of Fig. 7, the decoded regions 700 are, for example, decoded regions 701 and 702, and the like. The information processing device 100 controls the multiple parallel processing devices 220 to determine the data qubit 611 to be judged as a Z error by assigning the multiple decoded regions 700 to different parallel processing devices 220.

The information processing device 100 notifies each parallel processing device 220, of the indexes of the data qubit 611 and the ancillary qubit 621 for Z error identification in the logical qubit 600. The information processing device 100 notifies each parallel processing device 220, of the indexes of the data qubit 611 and the ancillary qubit 621 for Z error identification in the decoded region 700 assigned to the parallel processing device 220. As a result, the information processing device 100 enables the parallel processing device 220 to know the decoded region 700 assigned to the parallel processing device 220.

Each parallel processing device 22i obtains the syndrome of each ancillary qubit 621 in the decoded region 70i assigned to the device, from the quantum computing device 210. Each parallel processing device 22i determines whether the number of syndromes representing errors among the syndromes of each ancillary qubit 621 in the decoded region 70i assigned to the parallel processing device itself is even or odd. 0 is an even number.

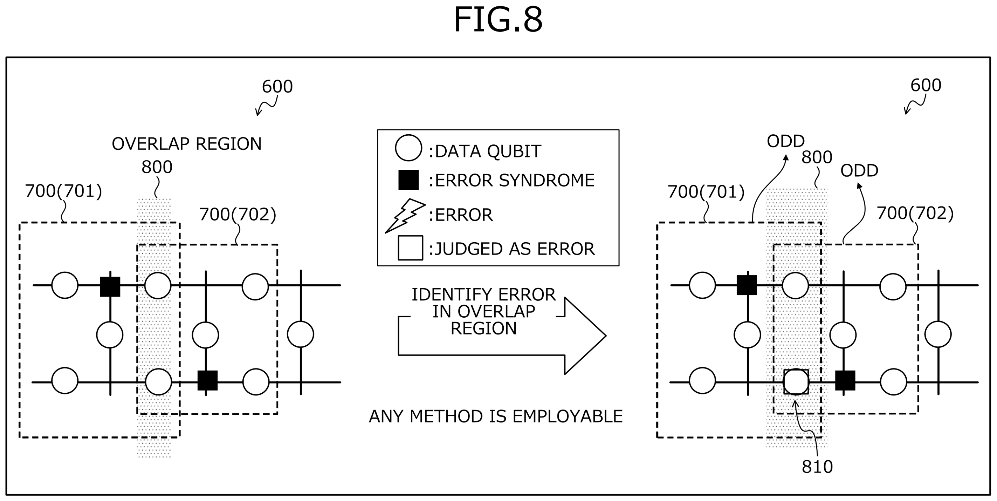

Each parallel processing device 22i distributes even/odd information representing the result of determining whether the number of syndromes representing errors is even or odd to all other parallel processing devices 220. This allows each parallel processing device 22i to refer to whether the number of syndromes representing errors in each decoded region 700 is even or odd, and obtain a guideline for determining a data qubit 611 to be judged as a Z error. Next, we move on to the explanation of Fig. 8.

In Fig. 8, each parallel processing device 22i determines the data qubit 611 to be judged as a Z error in an overlap region 800 of the decoded region 70i assigned to the parallel processing device 22i, based on the even/odd information of the corresponding decoded region 700.

When the decoded region 70i assigned to a parallel processing device 22i is determined to be an odd number of decoded regions 700, the parallel processing device 22i determines an odd number of data qubits 611 to be judged to be Z errors in the overlap region 800. When the decoded region 70i assigned thereto is determined to be an even number of decoded regions 700, the parallel processing device 22i determines an even number of the data qubits 611 to be judged to be Z errors in the overlap region 800. 0 is an even number.

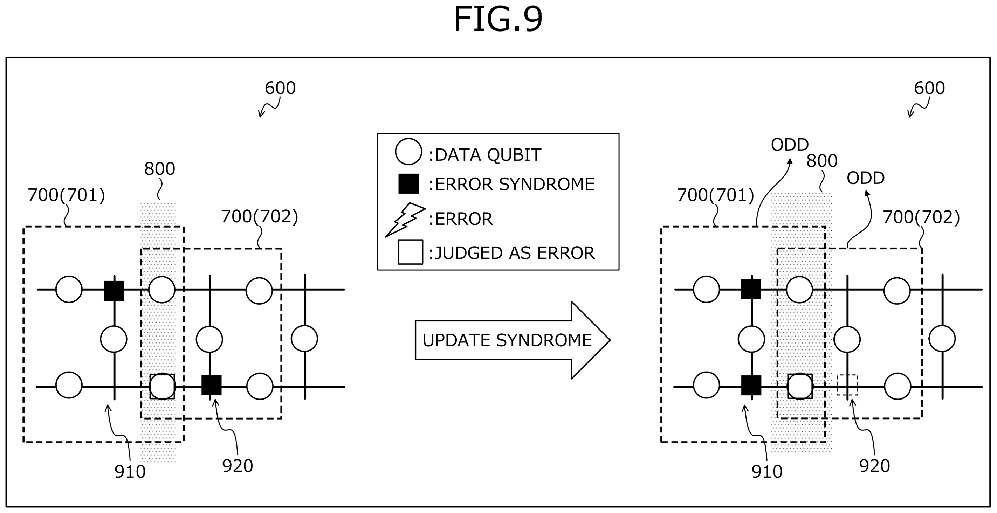

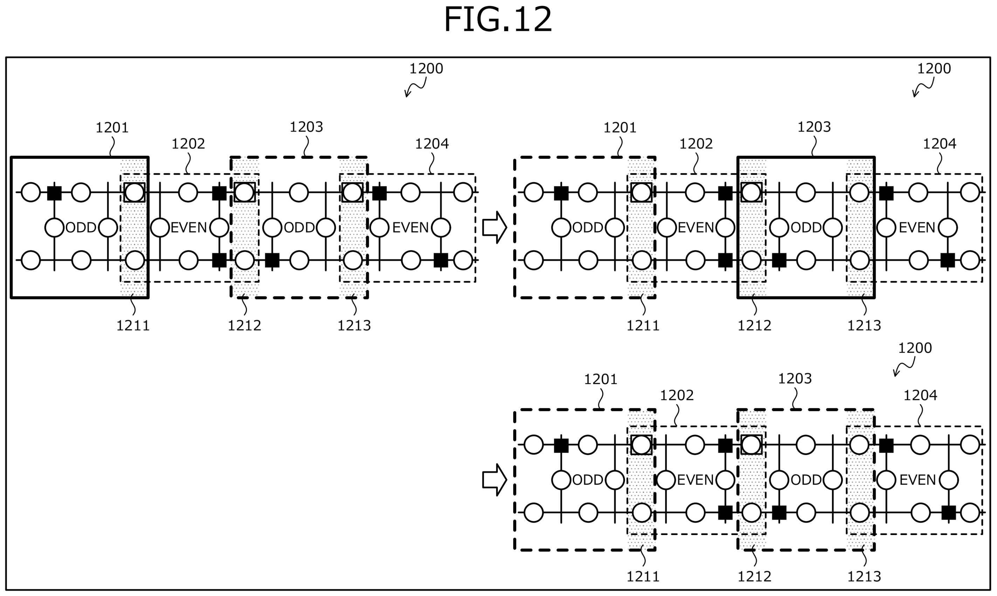

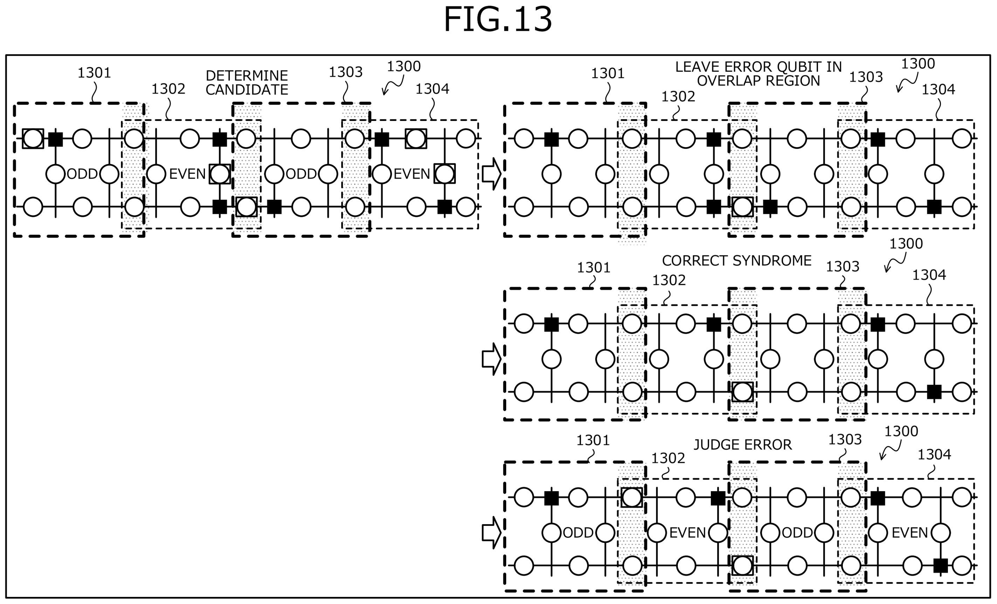

A specific example of each parallel processing device 22i determining a data qubit 611 to be judged as a Z error in the overlap region 800 will be described later with reference to, for example, Figs. 12 and 13. In the example of Fig. 8, it is assumed that one of the parallel processing devices 22i, for example, determines the data qubit 611 at a position 810 as the data qubit 611 to be judged as a Z error. Next, we move on to the explanation of Fig. 9.

In Fig. 9, each parallel processing device 22i updates the syndrome of the ancillary qubit 621 in the decoded region 70i assigned to the parallel processing device 22i, based on the result of determining the data qubit 611 to be judged as a Z error in the overlap region 800. The parallel processing device 22i inverts the syndrome of each ancillary qubit 621 adjacent to the data qubit 611 to be judged as a Z error in the decoded region 70i assigned to the parallel processing device 22i, for example.

For example, when the syndrome of the ancillary qubit 621 adjacent to the data qubit 611 determined to be a Z error represents an error, the parallel processing device 22i updates the syndrome of the ancillary qubit 621 to not represent an error. For example, when the syndrome of the ancillary qubit 621 adjacent to the data qubit 611 determined to be a Z error does not represent an error, the parallel processing device 22i updates the syndrome of the ancillary qubit 621 to represent an error.

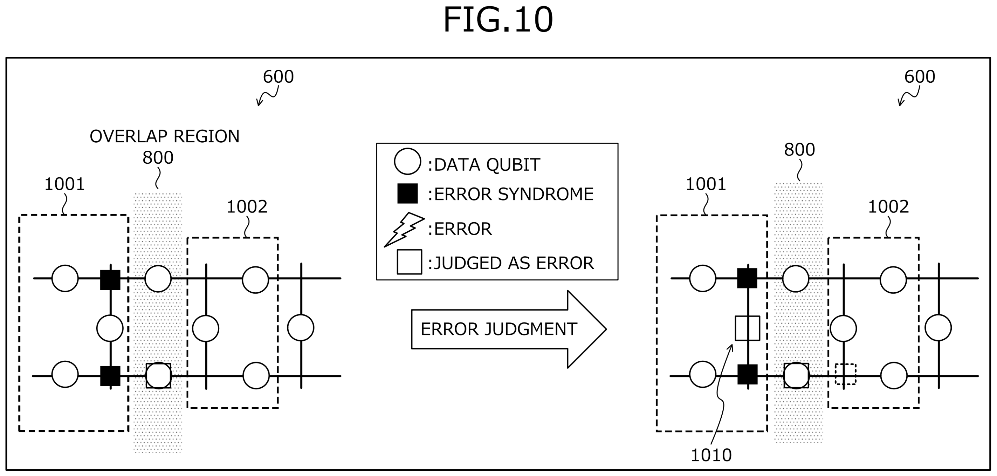

In the example of Fig. 9, it is assumed that a parallel processing device 22i has updated the syndrome of the ancillary qubit 621 that does not represent an error and is located at a position 910 adjacent to the data qubit 611 judged to be a Z error, to represent an error. It is also assumed that the parallel processing device 22i has updated the syndrome of the ancillary qubit 621 that represents an error and is located at a position 920 adjacent to the data qubit 611 judged to be a Z error, to represent an error. Next, we move on to the description of Fig. 10.

In Fig. 10, each parallel processing device 22i identifies a unique region 1000 other than the overlap region 800 in the decoded region 70i assigned to the parallel processing device 22i. In the following description, the unique region 1000 other than the overlap region 800 in the i-th decoded region 70i may be referred to as a "unique region 100i." The parallel processing device 22i determines a data qubit 611 to be judged as a Z error in the identified unique region 100i, based on the syndrome of the updated ancillary qubit 621.

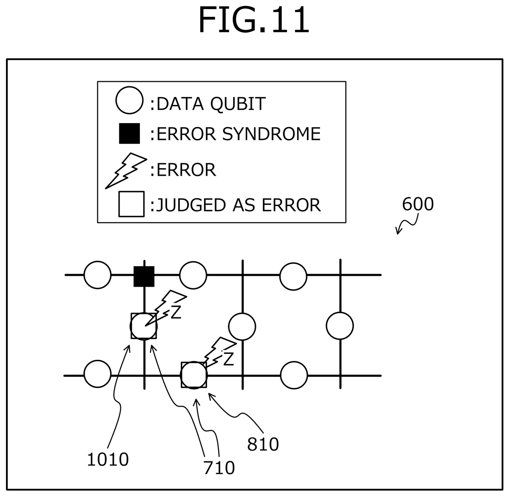

Each parallel processing device 22i searches for a pattern of the data qubit 611 to be judged as a Z error in the unique region 100i that reproduces the syndrome of the updated ancillary qubit 621, for example, as a minimum weight perfect matching problem. In the example of Fig. 10, it is assumed that one of the parallel processing devices 22i has determined that the data qubit 611 present at a position 1010 is the data qubit 611 to be judged as a Z error. Thus, each parallel processing device 22i may appropriately determine the data qubit 611 to be judged as a Z error in the decoded region 70i assigned to the parallel processing device 22i. Next, we move on to the explanation of Fig. 11.

Fig. 11 depicts the result of comparing the position 710 of the data qubit 611 in which a Z error has actually occurred with the positions 810 and 1010 of the determined data qubit 611 to be judged as a Z error by one of the parallel processing devices 22i. As depicted in Fig. 11, the position 710 of the data qubit 611 in which a Z error has actually occurred and the positions 810 and 1010 of the data qubit 611 determined as a Z error by one of the parallel processing devices 22i are the same.

As a result, each parallel processing device 22i may cooperate to accurately determine the data qubit 611 to be judged as a Z error among the logical qubits 600. Each parallel processing device 22i may share the process of determining the data qubit 611 to be judged as a Z error, and the processing time required to determine the data qubit 611 to be judged as a Z error among the logical qubits 600 can be reduced.

Each parallel processing device 22i may easily determine the data qubit 611 to be judged as a Z error even when the number of data qubits increases. Each parallel processing device 22i may be easily applied even when the size of the logical qubit 600 increases, because the parallel processing device 22i only needs to perform an operation related to the decoded region 70i assigned to the parallel processing device 22i.

Each parallel processing device 22i may be applied even when the number of syndromes representing errors is an odd number in the decoded region 70i assigned to the parallel processing device 22i, and may accurately search for a pattern of the data qubit 611 to be judged as a Z error. Therefore, each parallel processing device 22i may appropriately determine the data qubits 611 to be judged as Z errors in the logical qubits 600, regardless of the pattern of the data qubits 611 to be judged as Z errors.

Each parallel processing device 22i may also be applied to a case where an operation is performed that simultaneously handles two or more logical qubits. Even when an operation is performed that simultaneously handles two or more logical qubits, the information processing device 100 may assign multiple decoded regions into which each logical qubit of the two or more logical qubits is divided, to different parallel processing devices 220.

The information processing device 100 may divide the entire region of the logical qubit 600 into N decoded regions 700. The information processing device 100 may adopt an integer of 2 or more for N. Therefore, the information processing device 100 may divide the entire region of the logical qubit 600 into an appropriate number of the decoded regions 700 according to the number of parallel processing devices 220, the performance of the parallel processing devices 220, the size of the logical qubit 600, or the like.

Next, a specific example will be described with reference to Figs. 12 and 13 in which each parallel processing device 22i determines a data qubit 611 to be judged as a Z error in the overlap region 800 of the decoded region 70i assigned to the parallel processing device 22i.

In the following description, the decoded region 700 determined to have an odd number of syndromes representing errors may be referred to as an "odd-numbered decoded region 700." Also, in the following description, the decoded region 700 determined to have an even number of syndromes representing errors may be referred to as an "even-numbered decoded region 700."

Figs. 12 and 13 are explanatory diagrams depicting a specific example in which the data qubit 611 to be judged as a Z error in the overlap region 800 is determined. First, we move to the description of Fig. 12. As depicted in Fig. 12, for each odd-numbered decoded region 700, it is possible to update the pattern of the data qubits 611 to be judged to be a Z error in one or more overlap regions 800 existing to the right of the unique region 1000 in the decoded region 700.

For example, there is an odd-numbered decoded region 1201. There are overlap regions 1211 to 1213 existing to the right of the unique region 1000 in the odd-numbered decoded region 1201. Therefore, in each of the overlap regions 1211 to 1213, whether to determine any one of the data qubits 611 as a Z error is inverted.

For example, there is an odd-numbered decoded region 1203. There is an overlap region 1213 existing to the right of the unique region 1000 in the odd-numbered decoded region 1203. Therefore, in each overlap region 1213, whether to determine any one of the data qubits 611 as a Z error is inverted.

As a result, in the odd-numbered decoded regions 1201, the number of the data qubits 611 determined to be Z errors becomes an odd number. In the even-numbered decoded regions 1201, the number of the data qubits 611 determined to be Z errors becomes an even number.

For example, each parallel processing device 22i identifies the number of the odd-numbered decoded regions 700 on the left side of the decoded region 70i assigned to the parallel processing device 22i. For example, each parallel processing device 22i inverts whether to determine any of the data qubits 611 as a Z error in the left overlap region 800 in the decoded region 70i assigned to the parallel processing device 22i, a number of times equal to the number identified.

For example, each parallel processing device 22i identifies the number of the odd-numbered decoded regions 700 in the decoded region 70i assigned to the parallel processing device 22i and on the left side of the decoded region 70i. For example, each parallel processing device 22i inverts whether to determine a data qubit 611 as a Z error in the right overlap region 800 in the decoded region 70i assigned to the parallel processing device 22i, a number of times equivalent to the identified number.

This allows each parallel processing device 22i to accurately determine the data qubit 611 to be judged as a Z error in each overlap region 800 in the decoded region 70i assigned to the parallel processing device 22i. Next, moving to the explanation of Fig. 13, another specific example of determining the data qubit 611 to be judged as a Z error in the overlap region 800 will be explained.

In Fig. 13, each parallel processing device 22i searches for a pattern of the data qubit 611 to be judged as a Z error in the decoded region 70i assigned to the parallel processing device 22i, as a minimum weight perfect matching problem. This allows each parallel processing device 22i to determine a candidate for the data qubit 611 to be judged as a Z error in the decoded region 70i assigned to the parallel processing device 22i.

Each parallel processing device 22i initializes all data qubits 611 in the unique region 100i of the decoded region 70i assigned to the parallel processing device 22i, to data qubits 611 that are not determined to be Z errors. In the example of Fig. 13, the decoded region 700 is decoded regions 1301 to 1304, etc. As a result, each parallel processing device 22i leaves data qubits 611 that are determined to be Z errors in the overlap region 800 of the decoded region 70i assigned to the parallel processing device 22i.

Each parallel processing device 22i updates the syndrome of the ancillary qubits 621, based on the position of the determined data qubits 611 that judged to be Z errors in the decoded region 70i assigned to the parallel processing device 22i. Each parallel processing device 22i re-determines the data qubits 611 that are judged to be Z errors in the overlap region 800 of the decoded region 70i assigned to the parallel processing device 22i.

As a result, each parallel processing device 22i may accurately determine the data qubits 611 to be judged as having a Z error in each overlap region 800 in the decoded region 70i assigned to the parallel processing device 22i.

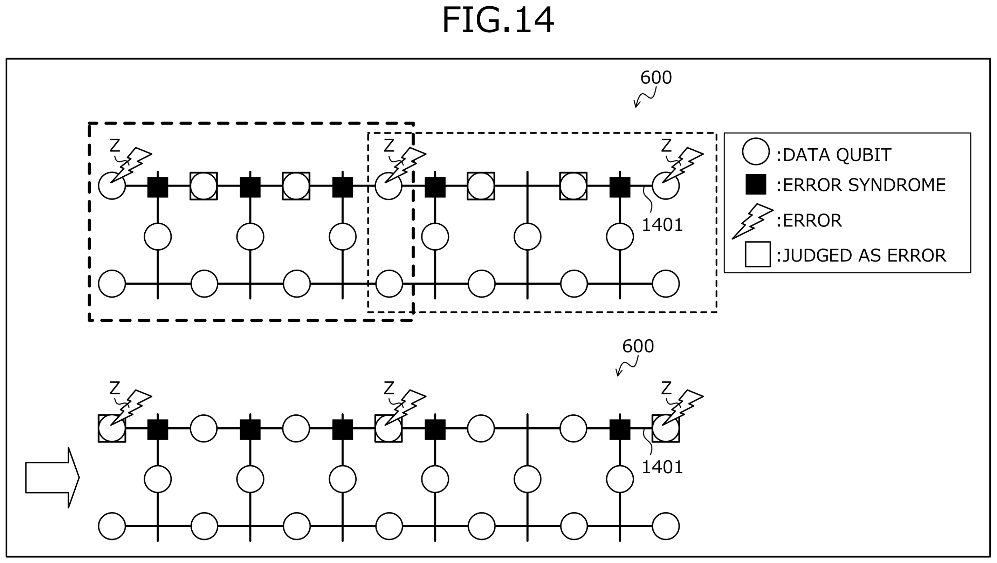

Next, an example of the quantum computing device 210 performing logic inversion to facilitate correction of a Z error will be described with reference to Fig. 14.

Fig. 14 is an explanatory diagram depicting an example of performing logic inversion. In Fig. 14, the quantum computing device 210 collects information indicating the positions of the data qubits 611 to be judged as having a Z error in the decoded region 70i, from each parallel processing device 22i. As a result, the quantum computing device 210 may identify the positions of the data qubits 611 to be judged as having a Z error in the logic qubit 600.

The quantum computing device 210 determines whether the number of the data qubits 611 to be judged as having a Z error on each line segment of the lattice is at least equal to a threshold value. The quantum computing device 210 inverts whether to determine each data qubit 611 as a Z error on any line segment of the lattice where it is determined that the number of the data qubits 611 to be judged as a Z error is at least equal to the threshold value. In the example of Fig. 14, the quantum computing device 210 inverts whether to determine each data qubit 611 as a Z error on a line segment 1401 of the lattice among the logical qubits 600.

This makes it easier for the quantum computing device 210 to correct the Z error. Here, while a case has been described in which the quantum computing device 210 inverts whether to determine each data qubit 611 as a Z error on any line segment of the lattice, the present disclosure is not limited hereto. For example, there may be a case in which any parallel processing device 22i inverts whether to determine each data qubit 611 as a Z error on any line segment of the lattice.

### (Specific Example of Operation of Information Processing Device 100)

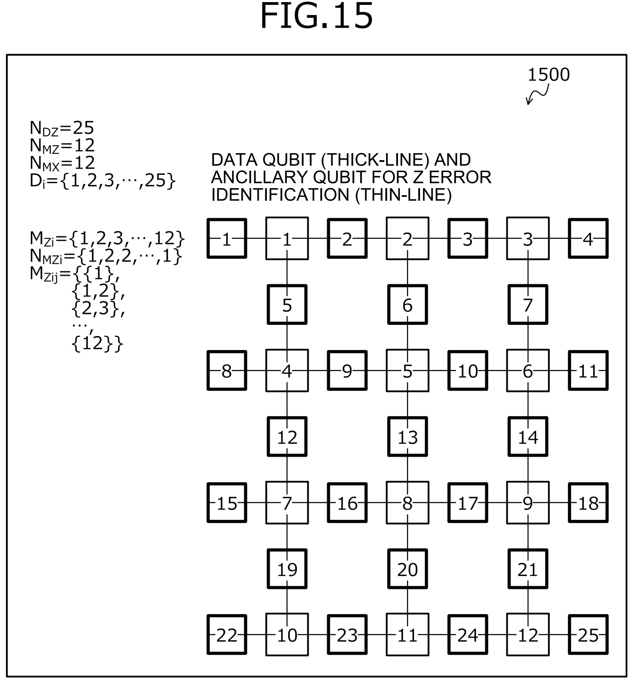

Next, a specific example of operation of the information processing device 100 will be described with reference to Figs. 15 to 20. In the examples of Figs. 15 to 20, it is assumed that there are N parallel processing devices 220.

Figs. 15, 16, 17, 18, 19, and 20 are explanatory diagrams depicting a specific example of operation of the information processing device 100. In Fig. 15, the information processing device 100 receives the number N_{DZ} of data qubits, the number N_{MZ} of the ancillary qubits for identifying Z errors, and the number N_{MX} of the ancillary qubits for identifying X errors in a logical qubit from the quantum computing device 210.

The information processing device 100 receives index data Dᵢ (i=1, ..., N_{DZ}) of data qubits in a logical qubit from the quantum computing device 210. The index data Dᵢ identifies, for example, the i-th data qubit.

The information processing device 100 receives index data M _{Zi} (i=1, ..., N_{MZ}) of ancillary qubits for Z error identification in a logical qubit from the quantum computing device 210. The index data M_{Zi} identifies, for example, the i-th ancillary qubit for Z error identification.

The information processing device 100 receives index data M_{Xi} (i=1, ..., N_{MX}) of ancillary qubits for X error identification in a logical qubit from the quantum computing device 210. The index data M_{Xi} identifies, for example, the i-th ancillary qubit for X error identification.

The information processing device 100 identifies the number N_{MZi} of ancillary qubits for Z error identification adjacent to the i-th (i=1, ..., N_{DZ}) data qubit in the logical qubit. The information processing device 100 identifies index data M_{Zij} (j=1, ..., N_{MZi}) of the ancillary qubits for Z error identification adjacent to the i-th(i=1, ..., N_{DZ}) data qubit in the logical qubit.

The information processing device 100 identifies the number N_{MXi} of ancillary qubits for X error identification adjacent to the i-th (i=1, ..., N_{DZ}) data qubit in the logical qubit. The information processing device 100 identifies index data M_{Xij} (j=1, ..., N_{MXi}) of ancillary qubits for X error identification adjacent to the i-th (i=1, ..., N_{DZ}) data qubit in the logical qubit.

In the example of Fig. 15, the information processing device 100 obtains N_{DZ=}25, N_{MZ}=12, N_{MX}=12, and D ᵢ₌{1, 2, 3, ..., 25} for the logical qubits of the surface code with a code distance of 4.

The information processing device 100 obtains M_{Zi=}{1, 2, 3, ..., 12} for the logical qubits of the surface code with a code distance of 4. The information processing device 100 identifies N_{MZi}={1, 2, 2, ..., 1} and M_{Zij}={{1}, {1, 2}, {2, 3}, ..., {12}} for the logical qubits of the surface code with a code distance of 4.

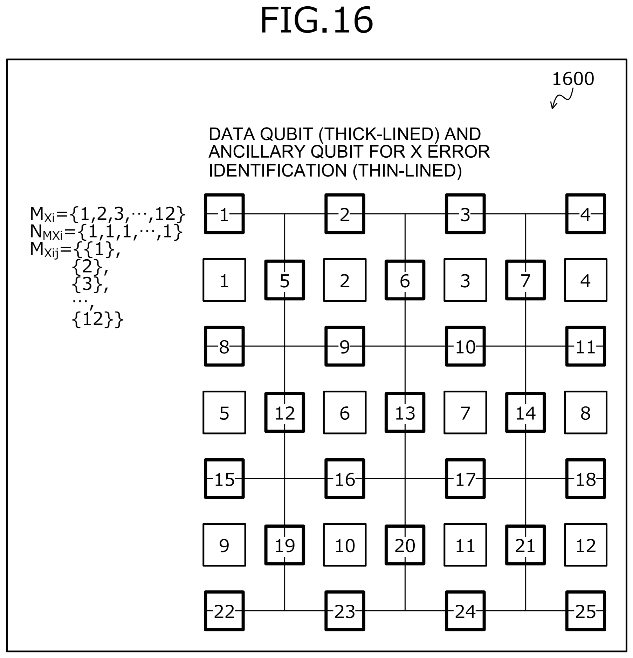

An arrangement 1500 of data qubits and ancillary qubits for identifying Z errors is depicted in Fig. 15. In the arrangement 1500, the data qubits are represented by thick-lined squares. In the arrangement 1500, the ancillary qubits for Z error identification are represented by thin-lined squares. Next, the description will move to Fig. 16.

In the example of Fig. 16, the information processing device 100 obtains M_{Xi}={1, 2, 3, ..., 12} for the logical qubits of the surface code with a code distance of 4. The information processing device 100 identifies N_{MXi}={1, 1, 1, ..., 1} and M_{Xij}={{1}, {2}, {3}, ..., {12}} for the logical qubits of the surface code with a code distance of 4.

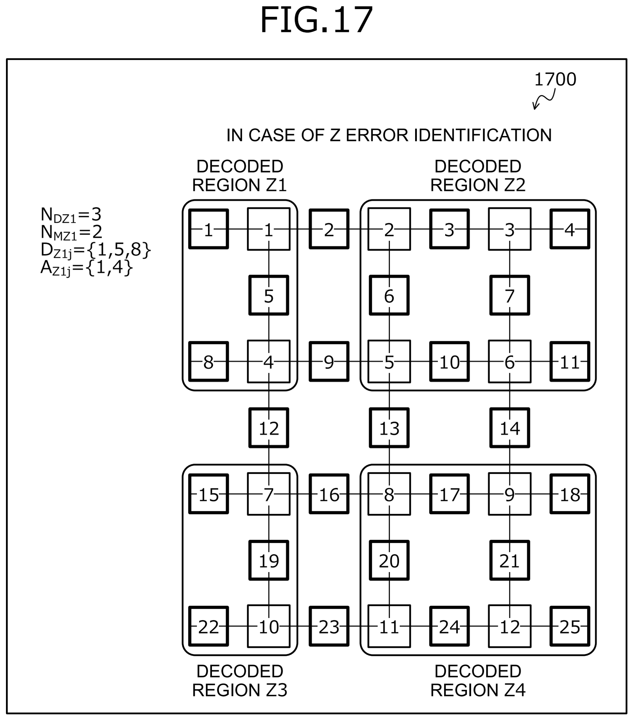

An arrangement 1600 of data qubits and ancillary qubits for X error identification is depicted in Fig. 16. In the arrangement 1600, the data qubits are represented by thick-lined squares. In the arrangement 1600, the ancillary qubits for X error identification are represented by thin-lined squares. Next, the description will move to Fig. 17.

In Fig. 17, the information processing device 100 divides an entire region 1700 of the logical qubits into N decoded regions for Z error identification. In the example of Fig. 17, the information processing device 100 divides the entire region 1700 of the logical qubits into a decoded region Z1, a decoded region Z2, a decoded region Z3, and a decoded region Z4 for Z error identification.

The information processing device 100 identifies the number N_{DZi} of data qubits and the number N_{MZi} of ancillary qubits for Z error identification in the i-th (i=1, ..., N) decoded region for Z error identification. The information processing device 100 identifies index data D_{Zij} (j=1, ..., N_{DZi}) of data qubits in the i-th (i=1, ..., N) decoded region for Z error identification. The index data D_{Zij} is a value that allows the data qubit to be uniquely identified in the entire region of the logical qubit.

The information processing device 100 identifies index data A_{Zij} (j=1, ..., N_{MZi}) of the ancillary qubit for Z error identification in the decoded region for Z error identification of the i-th (i=1, ..., N) number. The index data A _{Zij} is a value that allows the ancillary qubit for Z error identification to be uniquely identified in the entire region of the logical qubit.

In the example of Fig. 17, the information processing device 100 for example identifies N_{DZ1}=3 and N_{MZ1}=2. The information processing device 100 for example identifies D_{Z1j} (j=1, ..., N_{DZi})={1, 5, 8} and A_{Z1j}(j=1, ..., N_{MZi})={1, 4}.

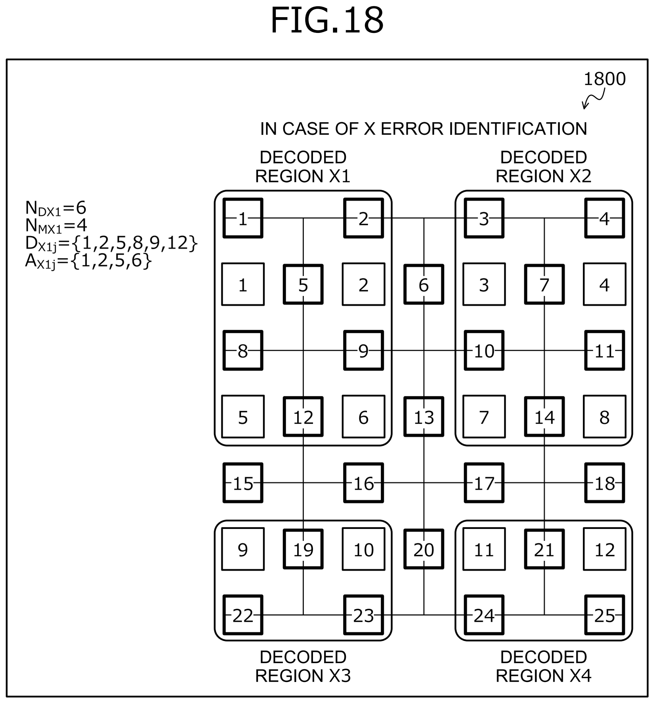

In Fig. 18, the information processing device 100 divides an entire region 1800 of the logical qubits into N decoded regions for X error identification. In the example of Fig. 18, the information processing device 100 divides the entire region 1800 of the logical qubits into a decoded region X1, a decoded region X2, a decoded region X3, and a decoded region X4 for X error identification.

The information processing device 100 identifies the number N_{DXi} of data qubits and the number N_{MXi} of ancillary qubits for X error identification in the i-th (i=1, ..., N) decoded region for X error identification. The information processing device 100 identifies index data D_{Xij} (j=1, ..., N_{DXi}) of the data qubits in the i-th (i=1, ..., N) decoded region for X error identification. The index data D_{Xij} is a value that allows a data qubit to be uniquely identified in the entire region of the logical qubits.

The information processing device 100 identifies index data A _{Xij} (j=1, ..., N_{MXi}) of the ancillary qubit for X error identification in the i-th (i=1, ..., N) decoded region for X error identification. The index data A_{Xij} is a value that makes the ancillary qubit for X error identification uniquely identifiable in the entire region of the logical qubit.

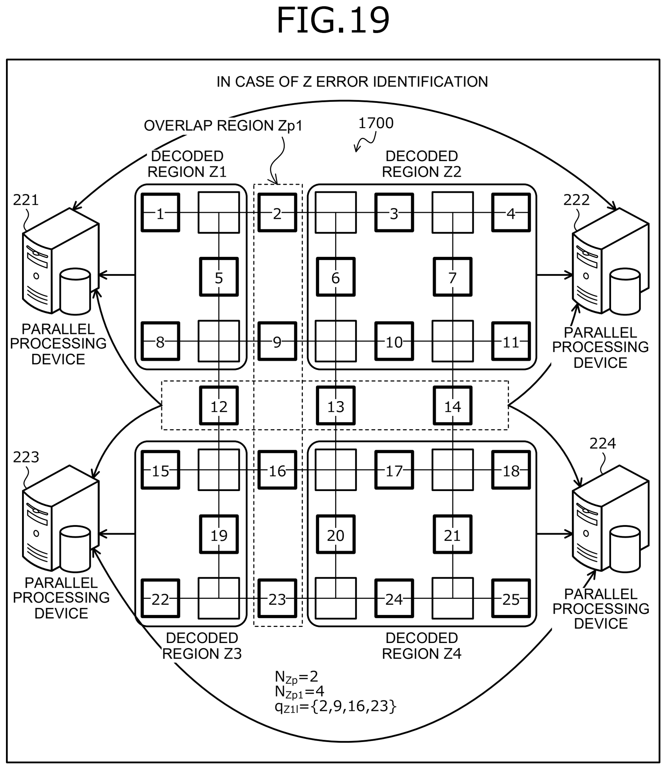

In the example of Fig. 18, the information processing device 100 for example identifies N_{DX1}=6 and N_{MX1}=4. The information processing device 100 for example identifies D_{X1j} (j=1, ..., N_{DXi})={1, 2, 5, 8, 9, 12} and A_{X1j} (j=1, ..., N_{MXi})={1, 2, 5, 6}. Next, we move on to the explanation of Fig. 19.

In Fig. 19, the information processing device 100 sets an overlap region shared by the decoded regions in the horizontal direction for Z error identification. The width of the overlap region is one data qubit. The overlap region is, for example, a linear region that does not include an ancillary qubit for Z error identification. In the example of Fig. 19, the information processing device 100, for example, sets an overlap region Zp1.

The information processing device 100 identifies the number N_{Zp} of overlap regions for Z error identification and the number N_{Zpk} (k=1, ..., N_{Zp}) of data qubits included in the k-th overlap region. The information processing device 100 identifies index data q_{Zkl} (I=1, ..., N_{Zpk}) of the data qubits included in the k-th overlap region.

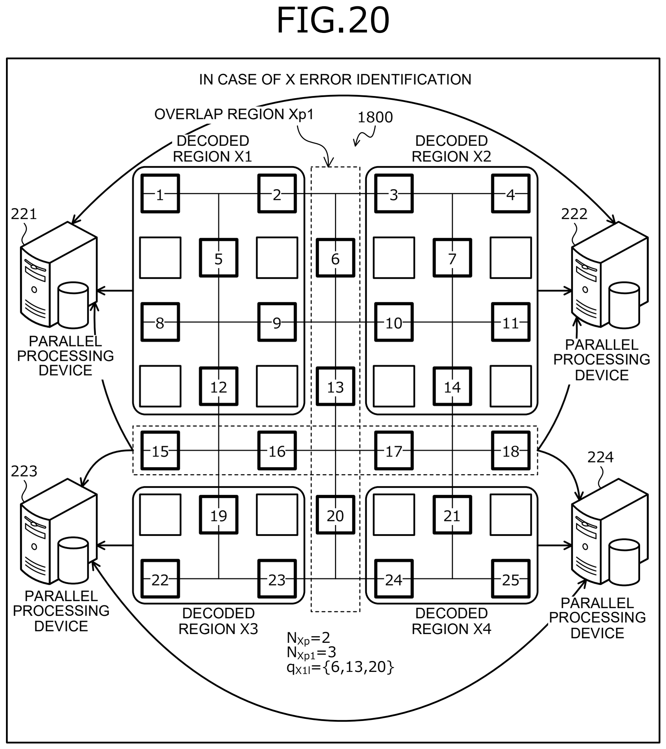

In the example of Fig. 19, the information processing device 100 identifies N_{Zp}=2, N_{Zp1}=4, and q_{Z1l}={2, 9, 16, 23}. The information processing device 100 assigns the i-th decoded region Zi for Z error correction to the i-th parallel processing device 22i. Next, we move on to the explanation of Fig. 20.

In Fig. 20, the information processing device 100 sets an overlap region shared by the decoded regions in the vertical direction for X error identification. The width of the overlap region is one data qubit. The overlap region is, for example, a linear region that does not include an ancillary qubit for X error identification. In the example of Fig. 20, the information processing device 100 for example sets an overlap region Xp1.

The information processing device 100 identifies the number N_{Xp} of overlap regions for identifying X errors and the number N_{Xpk} (k=1, ..., N_{Xp}) of data qubits included in the k-th overlap region. The information processing device 100 identifies index data q_{Xkl} (I=1, ..., N_{Xpk}) of data qubits included in the k-th overlap region.

In the example of Fig. 20, the information processing device 100 identifies N_{Xp}=2, N_{Xp1}=3, and q_{X1l}={6, 13, 20}. The information processing device 100 assigns the i-th decoded region Xi for X error correction to the i-th parallel processing device 22i.

The information processing device 100 transmits N_{SZi}, N_{MZi}, N_{DXi}, N_{MXi}, D_{Zij}, D_{Xij}, N_{Zp}, N_{Zpk}, q_{Zkl}, N_{Xp}, N_{Xpk}, q_{Xkl}, M_{Zij}, M_{Xij}, A_{Zij}, and A_{Xij} to the parallel processing device 22i (i=1, ..., N). This allows the information processing device 100 to notify the parallel processing device 22i of the i-th decoded region Zi for Z error correction and the i-th decoded region Xi for X error correction assigned to the parallel processing device 22i.

Each parallel processing device 22i determines a data qubit to be judged as a Z error, similar to Figs. 6 to 14. Each parallel processing device 22i, for example, determines a data qubit to be judged as a Z error in the direction from the decoded region Z1 to the decoded region Z2, similar to Figs. 6 to 14. Each parallel processing device 22i, for example, determines a data qubit to be judged as a Z error in the direction from the decoded region Z3 to the decoded region Z4, similar to Figs. 6 to 14.

Each parallel processing device 22i, for example, determines a data qubit to be judged as an X error, similar to Figs. 6 to 14. Each parallel processing device 22i for example determines a data qubit to be judged as an X error in the direction from the decoded region X1 to the decoded region X3, similar to Figs. 6 to 14. Each parallel processing device 22i, for example, determines a data qubit to be judged as an X error in the direction from the decoded region X2 to the decoded region X4, similar to Figs. 6 to 14.

This allows each parallel processing device 22i to reduce the processing time required to determine a data qubit to be judged as a Z error. Each parallel processing device 22i can accurately determine the data qubit to be judged as a Z error.

Also, each parallel processing device 22i may reduce the processing time required to determine the data qubit to be judged as an X error. Each parallel processing device 22i can accurately determine the data qubit to be judged as an X error.

Here, while a case has been described where the information processing device 100 assigns N decoded regions to N parallel processing devices 220, the present disclosure is not limited hereto. For example, the information processing device 100 may assign N decoded regions to one computer having N CPUs. For example, the information processing device 100 may assign N decoded regions to n parallel processing devices 220 having m CPUs such that N=m×n.

Here, while a case where each parallel processing device 22i determines the data qubit to be judged as a Z error in the direction from the decoded region Z1 to the decoded region Z2 and in the direction from the decoded region Z3 to the decoded region Z4 has been described, the present disclosure is not limited hereto. For example, each parallel processing device 22i may determine a data qubit to be judged as a Z error in the direction from the decoded region Z1 to the decoded region Z3 and in the direction from the decoded region Z2 to the decoded region Z4.

Here, a case has been described in which each parallel processing device 22i determines a data qubit to be judged as an X error in the direction from the decoded region X1 to the decoded region X3 and in the direction from the decoded region X2 to the decoded region X4, the present disclosure is not limited hereto. For example, each parallel processing device 22i may determine a data qubit to be judged as an X error in the direction from the decoded region X1 to the decoded region X2 and in the direction from the decoded region X3 to the decoded region X4.

### (An Example of Effects of Information Processing Device 100)

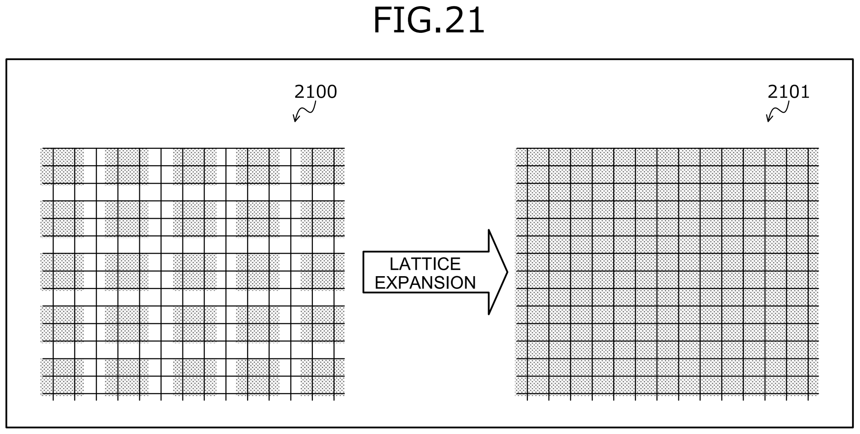

Next, an example of effects of the information processing device 100 will be described with reference to Figs. 21 to 23.

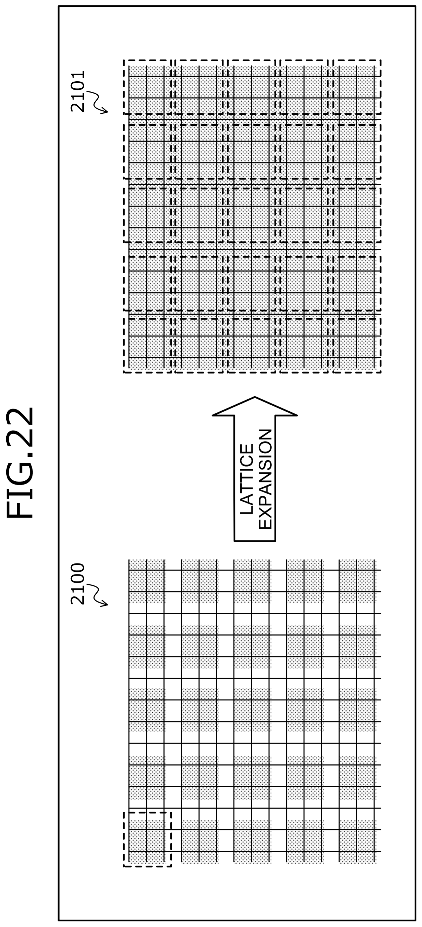

Figs. 21, 22, and 23 are explanatory diagrams depicting one example of effects of the information processing device 100. As depicted by reference numeral 2100 in Fig. 21, it is assumed that logical qubits with a code distance d are arranged in a 5×5 array on a two-dimensional plane. In the example of Fig. 21, d=3. Here, as depicted by reference numeral 2101 in Fig. 21, during an operation between logical qubits, plural logical qubits may be combined, causing lattice expansion. Next, moving to the explanation of Fig. 22, a case where the information processing device 100 is applied to plural logical qubits with lattice expansion will be explained.

As denoted by reference numeral 2101 in Fig. 22, it is assumed that the information processing device 100 divides the entire region of plural logical qubits with lattice expansion into 25, thereby allocating 25 decoded regions to 25 parallel processing devices 220. It is assumed that the information processing device 100 calculates a logical error probability by allocating 25 decoded regions to 25 parallel processing devices 220. Here, it is assumed that the logical error probability calculated by the information processing device 100 is compared with the logical error probability of one logical qubit before the lattice expansion.

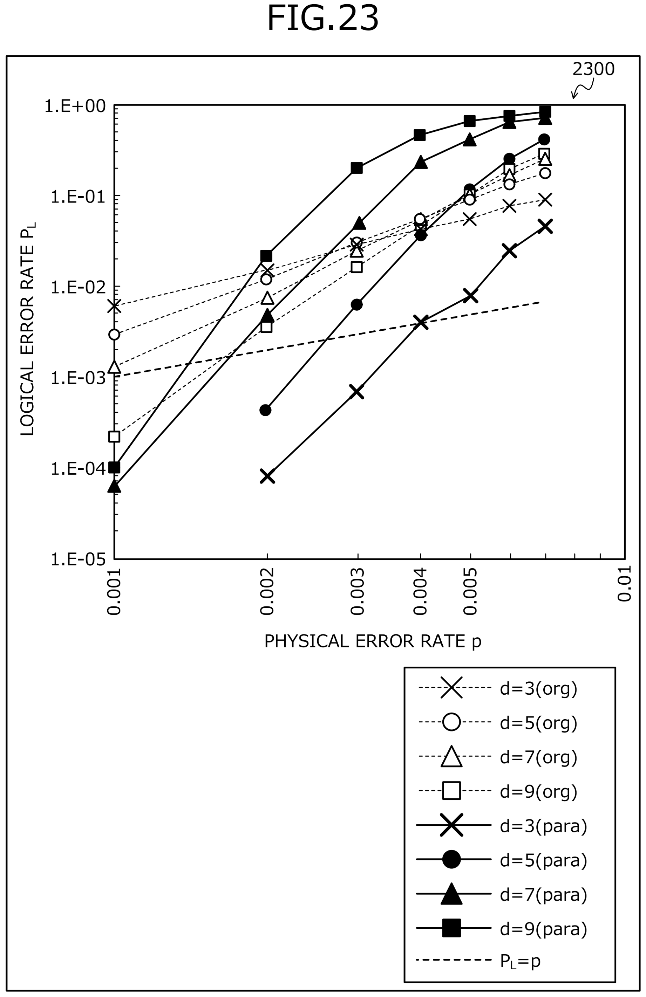

The decoding method is a solution method for the minimum weight perfect matching problem. The noise model is a circuit type (depth-6). The number of times the syndrome is measured is d times (≠ the code distance of the entire region). In the overlap region, the method depicted in Fig. 13 is adopted when determining the data qubit to be judged as an error. Next, we move on to the explanation of Fig. 23.

Fig. 23 depicts a graph 2300 that compares the logical error probability calculated by the information processing device 100 with the logical error probability of one logical qubit before lattice expansion. As depicted in the graph 2300, in the range where the physical error probability p is 0.1% or less, the logical error probability tends not to deteriorate before and after the lattice expansion for all values of d. This allows the information processing device 100 to handle the lattice expansion without deteriorating the logical error probability.

The information processing device 100 may control the multiple parallel processing devices 220 so that the multiple decoded regions obtained by dividing the entire region of the plural logical qubits that have been lattice-expanded are shared among the multiple parallel processing devices 220. Therefore, even when the lattice expansion occurs, the information processing device 100 can accurately determine the data qubit to be judged as an error, and may reduce the processing time required to determine the data qubit to be judged as an error.

### (First Preparatory Processing Procedure)

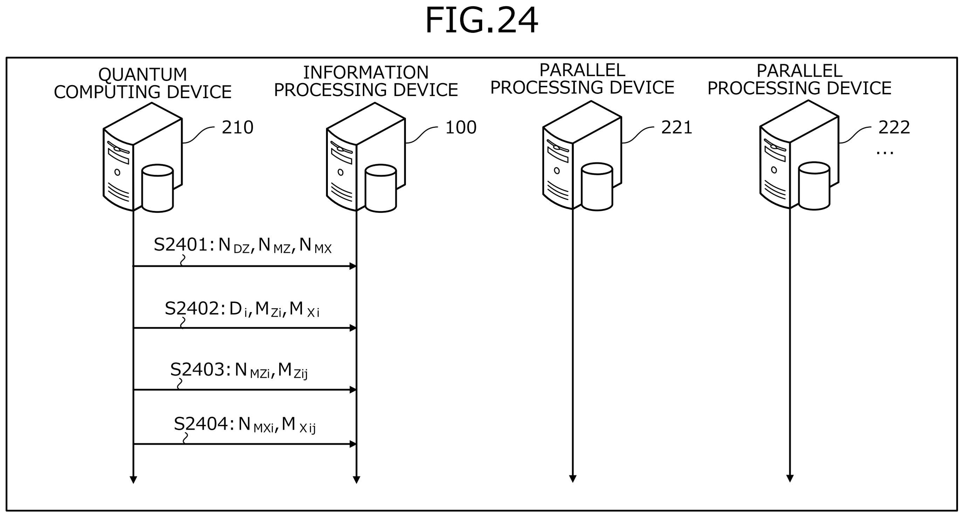

Next, an example of the first preparatory processing procedure executed by the information processing device 100 will be described with reference to Fig. 24. The first preparation process is implemented, for example, by the CPU 301 depicted in Fig. 3, a storage region such as the memory 302 or the recording medium 305, and the network I/F 303.

Fig. 24 is a flowchart depicting an example of the first preparatory processing procedure. In Fig. 24, the quantum computing device 210 transmits N_{DZ}, N_{MZ}, and N_{MX} in the logical qubit to the information processing device 100 (step S2401). N_{DZ} is the number of data qubits. N_{MZ} is the number of ancillary qubits for Z error identification. N_{MX} is the number of ancillary qubits for X error dentification.

The quantum computing device 210 transmits Dᵢ (i=1, ..., N_{DZ}), M_{Zi} (i=1, ..., N_{MZ}), and M_{Xi} (i=1, ..., N_{MX}) in the logical qubits to the information processing device 100 (step S2402). Dᵢ (i=1, ..., N_{DZ}) is index data of data qubits. M_{Zi} (i=1, ..., N_{MZ}) is index data of ancillary qubits for Z error identification. M_{Xi} (i=1, ..., N_{MX}) is index data of ancillary qubits for X error identification.

The quantum computing device 210 transmits N_{MZi} and M_{Zij} (j=1, ..., N_{MZi}) to the information processing device 100 (step S2403). N_{MZi} is the number of ancillary qubits for Z error identification adjacent to the i-th (i=1, ..., N_{DZ}) data qubit. M_{Zij} (j=1, ..., N_{MZi}) is index data of the ancillary qubits for Z error identification adjacent to the i-th (i=1, ..., N_{DZ}) data qubit.

The quantum computing device 210 transmits N_{MXi} and M_{Xij} (j=1, ..., N_{MXi}) to the information processing device 100 (step S2404). N_{MXi} is the number of ancillary qubits for X error identification adjacent to the i-th (i=1, ..., N_{DZ}) data qubit. M_{Xij} (j=1, ..., N_{MXi}) is index data of an ancillary qubit for identifying an X error adjacent to the i-th (i=1, ..., N_{DZ}) data qubit.

### (Second Preparatory Processing Procedure)

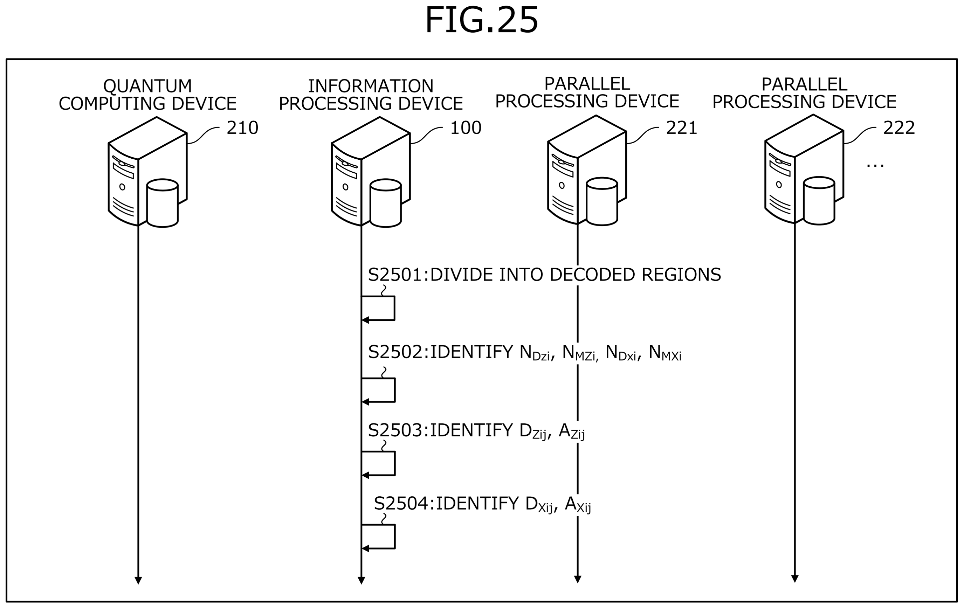

Next, an example of the second preparatory processing procedure executed by the information processing device 100 will be described with reference to Fig. 25. The second preparation process is implemented, for example, by the CPU 301 depicted in Fig. 3, a storage region such as the memory 302 or the recording medium 305, and the network I/F 303.

Fig. 25 is a flowchart depicting an example of the second preparatory processing procedure. In Fig. 25, the information processing device 100 divides the lattice data of the logical qubit into N decoded regions for identifying a Z error, and divides the lattice data of the logical qubit into N decoded regions for identifying an X error (step S2501).

The information processing device 100 identifies N_{DZi} and N_{MZi}, and N_{DXi} and N_{MXi} (step S2502). N_{DZi} is the number of data qubits in the decoded region for identifying the i-th (i=1, ..., N) Z error. N_{MZi} is the number of ancillary qubits in the decoded region for identifying the i-th (i=1, ..., N) Z error. N_{DXi} is the number of data qubits in the decoded region for identifying the i-th (i=1, ..., N) X error. N_{MXi} is the number of ancillary qubits in the decoded region for identifying the i-th (i=1, ..., N) X error.

The information processing device 100 identifies D_{Zij} (j=1, ..., N_{DZi}) and A_{Zij} (j=1, ..., N_{MZi}) (step S2503). D_{Zij} (j=1, ..., N_{DZi}) is index data of the data qubit in the decoded region for identifying the i-th (i=1, ..., N) Z error. A_{Zij}(j=1, ..., N_{MZi}) is index data of the ancillary qubit in the decoded region for identifying the i-th (i=1, ..., N) Z error.

The information processing device 100 identifies D _{Xij} (j=1, ..., N_{XZi}) and A _{Xij} (j=1, ..., N_{MXi}) (step S2504). D_{Xij} (j=1, ..., D_{Xi}) is index data of the data qubit of the i-th (i=1, ..., N) decoded region for identifying an X error. A_{Xij} (j=1, ..., N_{MXi}) is index data of the ancillary qubit of the i-th (i=1, ..., N) decoded region for identifying an X error.

### (Third Preparatory Processing Procedure)

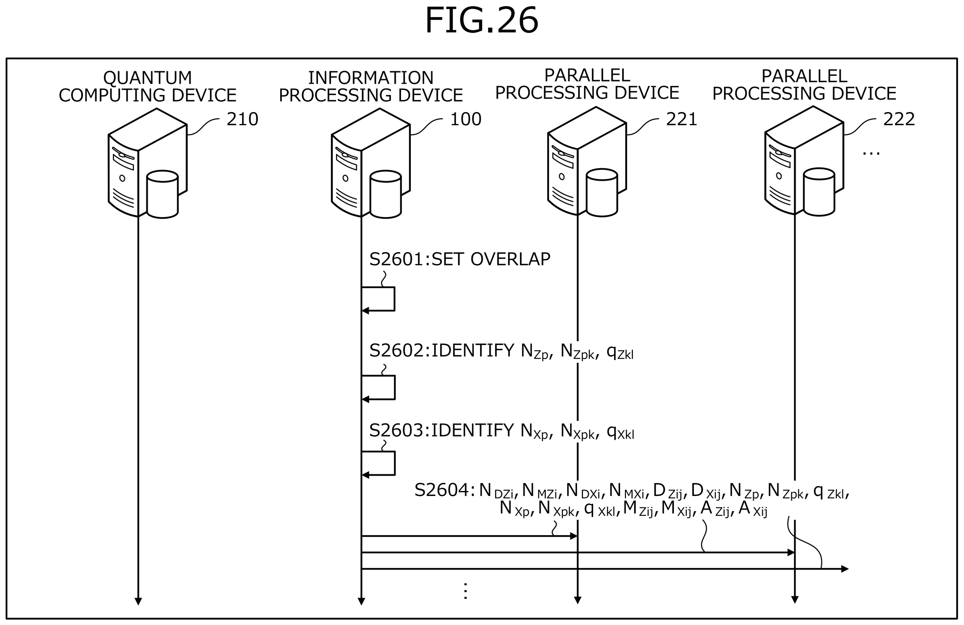

Next, an example of the third preparatory processing procedure executed by the information processing device 100 will be described with reference to Fig. 26. The third preparatory processing procedure is implemented by, for example, the CPU 301 depicted in Fig. 3, a storage region such as the memory 302 or the recording medium 305, and the network I/F 303.

Fig. 26 is a flowchart depicting an example of the third preparatory processing procedure. In Fig. 26, the information processing device 100 sets an overlap region between the decoded regions for identifying a Z error and an overlap region between the decoded regions for identifying an X error (step S2601).

The information processing device 100 identifies N_{Zp}, N_{Zpk} (k=1, ..., N_{Zp}), and q_{Zkl}(I=1, ..., N_{Zpk}) (step S2602). N_{Zp} is the number of overlapping regions for Z error identification. N_{Zpk} (k=1, ..., N_{Zp}) is the number of data qubits included in the k-th overlapping region. q_{Zkl} (I=1, ..., N_{Zpk}) is index data of the data qubits included in the k-th overlapping region.

The information processing device 100 identifies N_{Xp}, N_{Xpk} (k=1, ..., N_{Xp}), and q_{Xkl} (I=1, ..., N_{Xpk}) (step S2603). N_{Xp} is the number of overlapping regions for X error identification. N_{Xpk} (k=1, ..., N_{Xp}) is the number of data qubits included in the k-th overlap region. q_{Xkl} (I=1, ..., N_{Xpk}) is index data of the data qubits included in the k-th overlap region.

The information processing device 100 transmits N_{DZi}, N_{MZi}, N_{DXi}, N_{NXi}, D_{Zij}, D_{Xij}, N_{Zp}, N_{Zpk}, q_{Zkl}, N_{Xp}, N_{Xpk}, q_{Xkl}, M_{Zij}, M_{Xij}, A_{Zij}, and A_{Xij} to the parallel processing device 22i (step S2604).

### (Overall Processing Procedure)

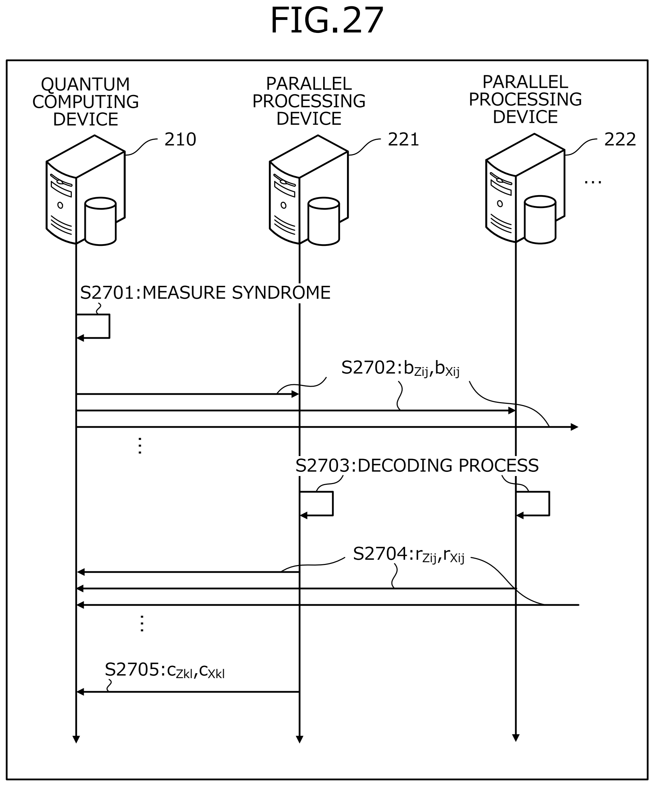

Next, an example of an overall processing procedure executed by information processing device 100 will be described with reference to Fig. 27. The overall processing is implemented by, for example, the CPU 301 depicted in Fig. 3, storage regions such as the memory 302 and the recording medium 305, and the network I/F 303.

Fig. 27 is a flowchart depicting an example of the overall processing procedure. In Fig. 27, the quantum computing device 210 measures the syndrome of the ancillary qubit for Z error identification and the syndrome of the ancillary qubit for X error identification (step S2701).

The quantum computing device 210 transmits b_{Zij}={0, 1} (j=1, ..., N_{MZi}) and b_{Xij}={0, 1} (j=1, ..., N_{MXi}) to the parallel processing device 22i (i=1, ..., N) (step S2702). b_{Zij}={0, 1} (j=1, ..., N_{MZi}) is syndrome data of the ancillary qubit for Z error identification. b_{Xij}={0, 1} (j=1, ..., N_{MXi}) is syndrome data of the ancillary qubit for identifying the X error.

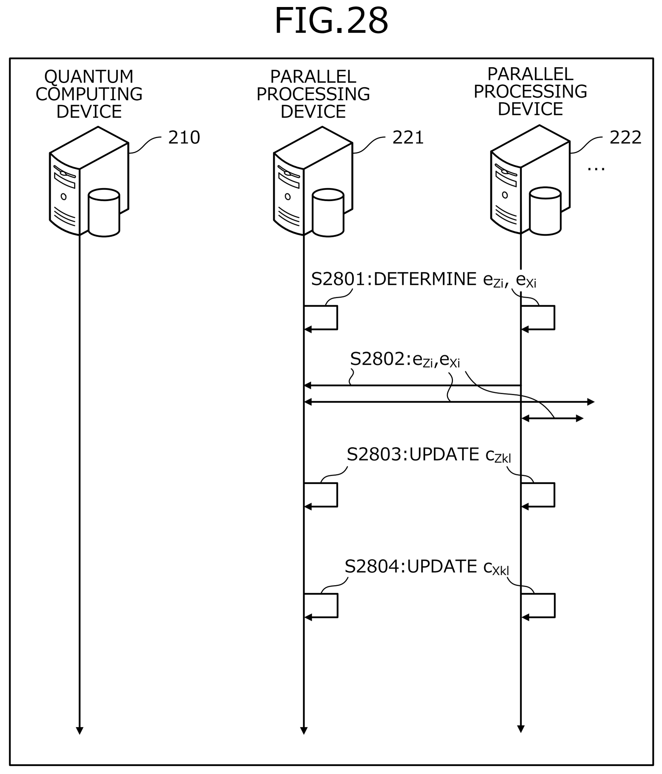

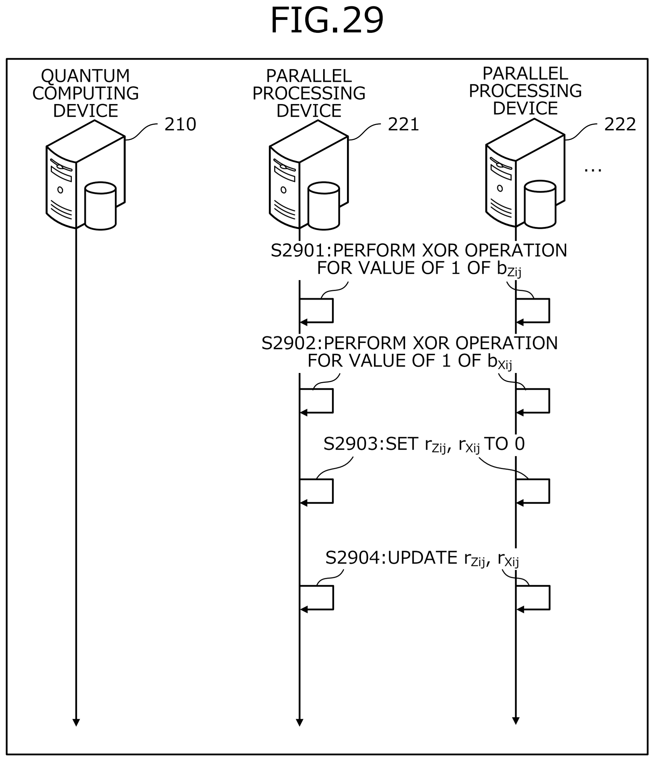

The N parallel processing devices 220 execute the decoding process described later in Figs. 28 and 29 (step S2703). The parallel processing device 22i transmits the Z error location data r_{Zij}={0, 1} (j=1, ..., N_{DZi}) and the X error location data r_{Xij}={0, 1} (j=1, ..., N_{DXi}) to the quantum computing device 210 (step S2704).

The parallel processing device 221 transmits the Z error location data c_{Zkl} of the overlap region for identifying the Z error and the X error location data c_{Xkl} of the overlap region for identifying the X error to the quantum computing device 210 (step S2705). This allows the N parallel processing devices 220 to accurately determine the data qubit in which a Z error has occurred and the data qubit in which an X error has occurred.

### (Decoding Procedure)

Next, an example of the decoding procedure executed by the information processing device 100 will be described with reference to Figs. 28 and 29. The decoding process is implemented, for example, by the CPU 301 depicted in Fig. 3, a storage region such as the memory 302 or the recording medium 305, and the network I/F 303.

Figs. 28 and 29 are flowcharts depicting an example of the decoding procedure. In Fig. 28, the parallel processing device 22i determines whether the number of values 1 in the syndrome b Zij of the ancillary qubit for identifying the Z error is even/odd e_{Zi}, and the number of values 1 in the syndrome b_{Xij} of the ancillary qubit for identifying the X error is even/odd e_{Xi} (step S2801). The even/odd e_{Zi}={0, 1}, where the value 0 indicates an even number and the value 1 indicates an odd number. Even/odd eₓᵢ={O, 1}, where a value of 0 indicates an even number and a value of 1 indicates an odd number.

The parallel processing device 22i distributes e_{Zi} and e_{Xi} to the other parallel processing devices 220 (step S2802).

The parallel processing device 22i updates the Z error location data c_{Zkl}={0, 1} (k=1, ..., N_{Zp}, l=1, ..., N_{Zpk}) of the overlap region for identifying a Z error according to a predetermined algorithm with e_{Xi} as an input value (step S2803).

The parallel processing device 22i updates the X error location data c_{Xkl}={0, 1}(k=1, ..., N_{Xp}, l=1, ..., N_{Xpk}) of the overlap region for identifying an X error according to a predetermined algorithm with e_{Xi} as an input value (step S2804). Next, we move on to the description of Fig. 29.

In Fig. 29, the parallel processing device 22i identifies a pair of k and I for which c_{Zkl} is the value 1. For the identified pair, the parallel processing device 22i performs an XOR operation with respect to the value of the syndrome b_{Zij} of the ancillary qubit for identifying a Z error based on q_{Zkl} and M_{Z,} when the index of the ancillary qubit for identifying an X error is included in A_{Zi} (step S2901).

The parallel processing device 22i identifies a pair of k and I for which c_{Xkl} is the value 1. For the identified pair, the parallel processing device 22i performs an XOR operation with respect to the value of the syndrome b_{Xij} of the ancillary qubit for identifying an X error based on q_{Xkl} and M_{X}, when the index of the ancillary qubit for identifying an X error is included in A_{Xi} (step S2902).

The parallel processing device 22i sets the Z error location data r_{Zij} and the X error location data r_{Xij} to 0 (step S2903). The parallel processing device 22i performs decoding based on b_{Zij} and b_{Xij}, and updates r_{Zij} and r_{Xij} (step S2904).

As set forth hereinabove, the information processing device 100 may identify multiple divided regions obtained by dividing the entire region of the logical qubit in the range from a region between adjacent lines in the first direction of the lattice to a region between another adjacent lines. The information processing device 100 may determine whether the number of syndromes representing errors in each of the identified divided regions is even or odd based on the syndromes of each ancillary qubit in the logical qubit. The information processing device 100 may determine a data qubit to be judged as an error from among each shared region shared between the divided regions in the multiple divided regions based on the determination result. The information processing device 100 may update the syndromes of each ancillary qubit based on the position of the determined data qubit to be judged as an error among the logical qubits. According to the information processing device 100, it is possible to determine a data qubit to be judged as an error from among the multiple divided regions, other than the respective shared regions shared between the divided regions, based on the syndromes of the respective updated ancillary qubits. This makes it possible for the information processing device 100 to easily determine the data qubit to be judged as an error.

According to the information processing device 100, in each divided region after the divided region in which the determination result is an odd number, it is possible to invert whether one data qubit included in the shared region present at the end is a data qubit to be judged as an error. This allows the information processing device 100 to accurately determine the data qubit to be judged as an error from among the shared regions.

According to the information processing device 100, it is possible to identify candidates for data qubits to be judged as an error in each divided region of the multiple divided regions. According to the information processing device 100, it is possible to leave candidates present in each shared region shared between the divided regions among the identified candidates, and delete candidates present outside the shared region. According to the information processing device 100, it is possible to determine a data qubit to be judged as an error from among the shared regions shared between the divided regions in the multiple divided regions based on the position of the remaining candidate and the syndrome. This allows the information processing device 100 to accurately determine the data qubit to be judged as an error from among the shared regions.

According to the information processing device 100, it is possible to identify multiple divided regions obtained by dividing a partial region including a predetermined number of line segments in the second direction of the lattice from the entire region of the logical qubit, each of which is divided in a range from a region between adjacent line segments in the first direction of the lattice to a region between another adjacent line segments. This allows the information processing device 100 to identify multiple divided regions obtained by dividing the entire region of the logical qubit in both the first direction and the second direction of the lattice.

According to the information processing device 100, when the number of data qubits determined as an error on a line segment in the first direction of the lattice is equal to or greater than a threshold value, the data qubits determined as an error on the line segment can be inverted from the data qubits determined as an error. This allows the information processing device 100 to accurately identify the data qubits determined as an error.

According to the information processing device 100, the identified multiple divided regions can be assigned to multiple computing units. According to the information processing device 100, the multiple computing units can be controlled so that the process of determining the data qubits determined as an error in the divided region is executed in parallel by the multiple computing units. This allows the information processing device 100 to make it possible to share the process of determining the data qubits determined as an error in the logical qubits among the multiple computing units. The information processing device 100 may reduce the processing time required to determine the data qubits determined as an error in the logical qubits.

According to the information processing device 100, an ancillary qubit corresponding to a Z error can be adopted as the ancillary qubit. According to the information processing device 100, the horizontal direction can be adopted as the first direction. According to the information processing device 100, the logical qubit can be adopted as a logical qubit in which ancillary qubits and data qubits are alternately present along a line segment in the first direction, starting from a data qubit. This allows the information processing device 100 to determine a data qubit to be judged as a Z error.

According to the information processing device 100, the ancillary qubit corresponding to an X error can be adopted as the ancillary qubit. According to the information processing device 100, the vertical direction can be adopted as the first direction. According to the information processing device 100, the logical qubit can be adopted as a logical qubit in which ancillary qubits and data qubits are alternately present along a line segment in the first direction, starting from a data qubit. This allows the information processing device 100 to determine a data qubit to be judged as an X error.

The information processing method described in the present embodiment may be implemented by executing a prepared program on a computer such as a personal computer and a workstation. The program is stored on a computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

### EXPLANATIONS OF LETTERS OR NUMERALS

100 information processing device
110, 600 logical qubit
111, 611 data qubit
112, 621, 631 ancillary qubit
120 divided region
121, 122 region
200 quantum operation control system
201 network
210 quantum computing device
220 parallel processing device
300, 400 bus
301, 401 CPU
302, 402 memory
303, 403 network I/F
304, 404 recording medium I/F
305, 405 recording medium
406 computing device I/F
407 computing device
500 storage unit
501 obtaining unit
502 identifying unit
503 managing unit
504 correcting unit
505 output unit
510 computing unit
601 qubit
610 data qubit set
612, 622, 632 lattice
620, 630 ancillary qubit set
700 to 702, 1201, 1203, 1301 to 1304 decoded region
710, 810, 910, 920, 1010 position
800, 1211 to 1213 overlap region
1000 unique region
1500, 1600 arrangement
1700, 1800 entire region
2100, 2101 reference numeral
2300 graph

## Claims

1. An information processing program causing a computer to execute a
process, the process comprising:
identifying a plurality of divided regions obtained by dividing an entire region of a logical qubit in which a plurality of data qubits and a plurality of ancillary qubits are arranged in a two-dimensional lattice pattern such that the ancillary qubits are present at intersections of the lattice and such that the ancillary qubits and the data qubits alternate each other along each line segment of the lattice, the divided regions sharing one region between adjacent line segments in a first direction of the lattice, the entire region being divided within a range from a first region between first adjacent line segments in the first direction of the lattice to a second region between second adjacent line segments in the first direction of the lattice;
determining, based on a syndrome of each of the plurality of ancillary qubits in the logical qubit, whether a number of the syndromes is even or odd, each of the syndromes representing an error in each of the identified divided regions;
from among shared regions that, of the plurality of divided regions, are shared by divided regions of the plurality of divided regions, determining a data qubit to be judged as an error such that in a divided region for which a result of the determining is odd, the number of data qubits to be judged as an error is an odd number and such that in a divided region for the result of the determining is even, the number of data qubits to be judged as an error is an even number;
updating the syndrome of the each of the ancillary qubits based on a position of the determined data qubit to be judged as an error in the logical qubit; and
determining, based on the updated syndrome of the each of the ancillary qubits, the data qubit to be judged as an error, from among regions that, of the plurality of divided regions, are other than the shared regions.

2. The information processing program according to claim 1, wherein
sequentially from a head of the plurality of divided regions, each time a divided region for which the result of the determining is an odd number occurs, in each one or more divided regions subsequent thereto, the determining the data qubit to be judged as an error includes, for each shared region that is present at a tail side and shared with another divided region, inverting whether a data qubit contained in the each shared region is the data qubit to be judged as an error and thereby determining from among the shared regions, the data qubit to be judged as an error.

3. The information processing program according to claim 1, the process further comprising:
identifying candidates for the data qubit to be judged as an error in each of the plurality of divided regions; and
among the identified candidates, leaving candidates present in the each of the shared regions and deleting candidates present in regions other than the shared regions, wherein
the determining the data qubit to be judged as an error, from among the shared regions includes determining, based on positions of the candidates remaining and the syndrome, the data qubit to be judged as an error.

4. The information processing program according to claim 1, the process further comprising:
identifying a plurality of divided regions obtained by dividing a partial region of the entire region of the logical quantum bit, from the first region between the first adjacent line segments in the first direction of the lattice to the second region between the second adjacent line segments in the first direction of the lattice, such that the divided regions share the one region between adjacent line segments in the first direction of the lattice, the partial region including a predetermined number of line segments in a second direction of the lattice.

5. The information processing program according to any one of claims 1 to 4, the process further comprising:
when the number of data qubits to be judged as an error along a line segment in the first direction of the lattice is equal to or greater than a threshold value, inverting data qubits not determined as an error on the line segment and data qubits determined as an error on the line segment.

6. The information processing program according to any one of claims 1 to 4, the process further comprising:
allocating the identified divided regions to a plurality of operation units; and
controlling the plurality of operation units to execute in parallel:
the process of determining,
the process of determining the data qubit to be judged as an error from among the shared regions,
the updating the syndrome of the each of the plurality of ancillary qubits, and
the determining the data qubit to be judged as an error from among the regions other than the shared regions, of the plurality of divided regions.

7. The information processing program according to any one of claims 1 to 4, wherein
the plurality of ancillary qubits corresponds to a Z error, and
the first direction is a horizontal direction, and the plurality of ancillary qubits and the plurality of data qubits are arranged alternating each other along a line segment in the first direction, starting with one of the plurality of data qubits.

8. The information processing program according to any one of claims 1 to 4, wherein
the plurality of ancillary qubits corresponds to an X error, and
the first direction is a vertical direction, and the plurality of ancillary qubits and the plurality of data qubits are arranged alternating each other along a line segment in the first direction, starting with one of the plurality of data qubits.

9. An information processing method executed by a computer, the method comprising:
identifying a plurality of divided regions obtained by dividing an entire region of a logical qubit in which a plurality of data qubits and a plurality of ancillary qubits are arranged in a two-dimensional lattice pattern such that the ancillary qubits are present at intersections of the lattice and such that the ancillary qubits and the data qubits alternate each other along each line segment of the lattice, the divided regions sharing one region between adjacent line segments in a first direction of the lattice, the entire region being divided within a range from a first region between first adjacent line segments in the first direction of the lattice to a second region between second adjacent line segments in the first direction of the lattice;
determining, based on a syndrome of each of the plurality of ancillary qubits in the logical qubit, whether a number of the syndromes is even or odd, each of the syndromes representing an error in each of the identified divided regions;
from among shared regions that, of the plurality of divided regions, are shared by the divided regions, determining a data qubit to be judged as an error such that in a divided region for which a result of the determining is odd, the number of data qubits to be judged as an error is an odd number and such that in a divided region for the result of the determining is even, the number of data qubits to be judged as an error is an even number;
updating the syndrome of the each of the ancillary qubits based on a position of the determined data qubit to be judged as an error in the logical qubit; and
determining, based on the updated syndrome of the each of the ancillary qubits, the data qubit to be judged as an error, from among regions that, of the plurality of divided regions, are other than the shared regions.

10. An information processing device, comprising a controller configured to:
identify a plurality of divided regions obtained by dividing an entire region of a logical qubit in which a plurality of data qubits and a plurality of ancillary qubits are arranged in a two-dimensional lattice pattern such that the ancillary qubits are present at intersections of the lattice and such that the ancillary qubits and the data qubits alternate each other along each line segment of the lattice, the divided regions sharing one region between adjacent line segments in a first direction of the lattice, the entire region being divided within a range from a first region between first adjacent line segments in the first direction of the lattice to a second region between second adjacent line segments in the first direction of the lattice;
determine, based on a syndrome of each of the plurality of ancillary qubits in the logical qubit, whether a number of the syndromes is even or odd, each of the syndromes representing an error in each of the identified divided regions;
from among shared regions that, of the plurality of divided regions, are shared by the divided regions, determine a data qubit to be judged as an error such that in a divided region for which a result of the determining is odd, the number of data qubits to be judged as an error is an odd number and such that in a divided region for the result of the determining is even, the number of data qubits to be judged as an error is an even number;
update the syndrome of the each of the ancillary qubits based on a position of the determined data qubit to be judged as an error in the logical qubit; and
determine, based on the updated syndrome of the each of the ancillary qubits, the data qubit to be judged as an error, from among regions that, of the plurality of divided regions, are other than the shared regions.
